# EUROPEAN PATENT SPECIFICATION

(11) **EP 3 640 833 B1**
(45) Date of publication and mention of the grant of the patent: **19.05.2021**
(21) Application number: 19204149.9
(22) Date of filing: 18.10.2019
(51) Int. Cl.: G06F 11/30, G06F 21/62, H04L 29/08, H04L 29/06, G06F 11/34, H04L 12/24, H04L 12/26

(54) **GENERATION AND MAINTENANCE OF IDENTITY PROFILES FOR IMPLEMENTATION OF SECURITY RESPONSE**
ERSTELLUNG UND PFLEGE VON IDENTITÄTSPROFILEN ZUR IMPLEMENTIERUNG VON SICHERHEITSREAKTIONEN
GÉNÉRATION ET MAINTENANCE DE PROFILS D'IDENTITÉ POUR LA MISE EN OEUVRE D'UNE RÉPONSE DE SÉCURITÉ

(30) Priority: 19.10.2018 US 201816165877
(43) Date of publication of application: 22.04.2020
(73) Proprietor: Logrhythm, Inc., Boulder, CO 80301 (US)
(72) Inventor: PETERSEN, Christopher L., Boulder CO Colorado 80301 (US); DEAKYNE, Bruce, Boulder CO Colorado 80301 (US); ELLIS, David, Boulder CO Colorado 80305 (US); WILLEMS, Matthew, Westminster CO Colorado 80021 (US); ALDRICH, Benjamin, Brighton CO Colorado 80602 (US); SANNES, Michael, Louisville CO Colorado 80027 (US)
(74) Representative: D Young & Co LLP

(56) References cited:
- WO-A1-2017/087074
- US-A1- 2012 005 542
- US-A1- 2012 246 303

## Description

### FIELD

The present disclosure relates in general to data network monitoring for identification of security threats and other occurrences of interest and further to analytical tools for selecting actions to be taken to reduce further harm or vulnerability.

### BACKGROUND

Modern organizational infrastructures (e.g., made up of routers, switches, file servers, cloud-based applications, and the like) generate large volumes of data (e.g., log messages, machine-readable data, etc.) that are typically analyzed by various types of security and event management products configured to intelligently process the data to identify various occurrences of interest. Raw data may be homogenized and processed into structured data, thereby providing a common or standard structure for analysis. For example, an instance of structured data corresponding to an occurrence may include a classification of the occurrence (e.g., "compromise," "denial of service," etc.), normalized time stamps corresponding to when the occurrence was first detected, a source of the data, etc.

Network monitoring systems analyze large volumes of data (e.g., structured data, log messages, etc.) to identify occurrences that may be indicative of a security concern. For instance, structured data that departs in some manner from expected or benign behavior may be identified as an occurrence of interest for further analysis or action. Rules may be used to further process occurrences in order to identify and implement appropriate responses to potential threats, e.g., by generating an alarm, notifying an administrator, or by taking some remedial action such as limiting access to compromised accounts.

US 2012/005542 A1 and US 2012/246303 A1 both relate to tools for use in obtaining useful information from processed log messages generated by a variety of network platforms (e.g., Windows servers, Linux servers, UNIX servers, databases, workstations, etc.).

WO 2017/087074 A1 relates to a computer-implemented method for anonymizing log entries by (1) detecting a data pattern in a group of log entries documenting events performed by at least one process executing on at least one device, (2) identifying, in the data pattern, at least one data field in the log entries that contains variable data, (3) evaluating the data field containing variable data to determine whether the data field contains sensitive data, and (4) in response to determining whether the data field contains sensitive data, applying a data-anonymization policy to the data field to anonymize the log entries.

### SUMMARY

Particular aspects are set out in the appended independent claims. Various optional embodiments are set out in the dependent claims.

Disclosed herein are utilities (e.g., methods, apparatuses, and systems) for enriching log message data to improve network monitoring and selecting actions to be taken in response to a perceived threat or anomaly. The utilities include generating a plurality of identity profiles each containing one or more objects such as identifiers and/or attributes associated with an entity (e.g., a person, organization, group or team, etc.). In this regard, identifiers associated with an entity may include an email address, employee ID number, building access badge number, a photograph or likeness, phone number, or any other information which distinguishes that particular entity from others. Attributes may include any additional information pertaining to characteristics of the entity such as department, security clearance level, office location or address, and/or the like, which may be beneficial in analyzing and reacting to occurrences.

Broadly, a data network of an organization may include or be in operative communication with one or more Identity and Access Management ("IAM") platforms. Example IAM platforms may include Azure® Active Directory, Okta®, SailPoint®, etc. Each IAM platform may include a plurality of unique identities such as, for example, one unique identity for each employee registered in the IAM platform. Each unique identity may broadly be in the form of a collection of objects which defines the unique identity and includes identifiers (which may be used to correlate log message data to the particular unique identity), attributes (which describe characteristics of the entity associated with the unique identity), and an entity name (which provides a title of the unique identity).

In one arrangement, an identity profile may be generated for each unique identity located on an IAM platform. An identity profile may include objects sourced from the one or more IAM platforms and/or other sources of identity information (e.g., csv or text files, physical security systems, payroll systems, enterprise applications, etc.). In other words, an identity profile may serve as a master profile in which user data is aggregated from across various disparate IAM platforms and other data sources. As used herein "IAM platform" may refer to all sources of data objects associated with users. In the event duplicate identity profiles are generated (e.g., pertaining to the same entity), the identity profiles may be merged, linked, or otherwise joined to form a single identity profile for the entity. Each identity profile may also be associated with a key, which is unique from other keys associated with other identity profiles to distinguish each identity profile from the others. Each key can then be utilized when processing log message data as described below.

Log message data may include machine-readable data generated in response to occurrences on one or more networks. For example, an occurrence could be an email being sent which has an attached file and causes a log message to be generated describing a source IP address (e.g., of device from which email originated), a destination IP address (e.g., of device designated to receive the email), an email address of the sender, an email address of the recipient, a time at which the transfer was initiated, a time at which the transfer completed, a size and type of the attached file, etc. Further, some log messages are generated automatically at certain time intervals, e.g., heartbeat logs used to record device statuses. Whether a log message is generated in response to a particular action or at a predetermined interval, the term "occurrence" as used herein refers to any trigger that leads to the generation of log message data.

Log messages from disparate devices and platforms may have proprietary or non-standard contents and formatting. The variance in log message contents and formatting can make it difficult to process information from a plurality of platforms in order to identify occurrences of interest (e.g., potentially harmful actions). For example, two distinct occurrences, when considered in combination, may be indicative of a security threat. However, if these two distinct occurrences transpire on different platforms, the threat may not be detected due to analysis of each platform occurring in isolation. Therefore, pre-processing may be performed on log messages from some or all platforms on a network to homogenize the content into a standard format. For example, log message content and data fields may be parsed, extracted, and/or modified into a desired data structure. This "structured data" may be monitored in accordance with the disclosed utilities. Formatting the log message content into a data structure (e.g., a table) allows for uniform application of rules or heuristic analysis to seek consistent and reliable results. It should be appreciated that "log message data," as that term is used herein, may refer to one or both of structured data and unstructured data (e.g., raw or original log messages).

An instance, or portion, of log message data may comprise information gleaned from one or more log messages. Maintaining the example described above, a portion of log message data may include all of the information from the log message (e.g., file size, source and destination info, etc.) as it has been pre-processed into a structured format with standardized data fields. A portion of log message data may include one or more identifiers as well as "occurrence data." In this regard, "occurrence data" refers to the data in a portion of log message data which conveys information about the occurrence and circumstances which triggered the generation of the respective log message. In some instances, the identifiers may be contained within the occurrence data and in other instances the identifiers may be contained in a description of the source of the log message (e.g., a header).

During processing (or pre-processing) of log message data, an identifier may be detected or identified within the log message data. In response, the identifier may be used to determine an identity profile containing or associated with the identifier. The key from that identity profile may then be appended to or associated with the respective log message data. In this regard, log message data may be "enriched" by the appendage of a key which allows further data processing and analysis steps to access the identity profile associated with the key. Further in this regard, the information available in the identity profile (e.g., identifiers and attributes of the entity) allows for a more robust and complete analysis of potential threats. For example, in traditional log processing and analysis, a compromised email address may lead to a search for additional logs containing that email address. However, many logs that are associated with the same user may pass through undetected because they do not contain the specific compromised email address (but rather, for example, a different email address), even though these logs may contain additional information that is useful in analyzing the threat. By enriching log message data with access to an identity profile associated with the user, the log processing and analysis may be broadened to encompass a wider range of log message data, specifically other log message data containing identifiers or attributes retrieved from the identity profile, thereby leading to a more complete and thorough analysis with deeper consideration of the user (or other entity) associated with the triggering log message data.

Log processing and analysis using identity profiles may lead to the generation of one or more events. In this regard, an event may be a newly created log file, a modified portion of log message data, or any other object or text file that conveys to one or more components of the described system (e.g., log or event manager) that one or more occurrences present cause for concern. The contents of an event may include some, if not all, of the data present in a portion of log message data which leads to generation of the event.

While traditional monitoring systems are often configured to take action with respect to identifiers (more specifically, accounts associated with identifiers) located in log message data leading to an event (e.g., a destination email address associated with a malicious email), they fail to implement preventative measures in relation to related identifiers that are not identified in the log message data leading to the event (e.g., the Active Directory account of the user receiving the malicious email). As a result, other accounts associated with the user and/or organization may remain active, presenting an opportunity for a further breach.

In accordance with utilities of the present disclosure, a network monitoring system may implement policies to prevent further harm and limit vulnerabilities when a generated event indicates a potential threat. In this regard, accounts which are not directly implicated in an occurrence may nonetheless be identified and acted upon in a precautionary manner. For instance, generation of a suspicious event based on one or more accounts associated with a user may automatically cause the flagging of one or more other accounts associated with the user (e.g., accounts not identified in the log message data leading to the event) for increased monitoring or even the locking of such other accounts. Such responses may be an improvement over traditional systems wherein only the account or accounts of a user which are directly implicated in an attack are acted upon, leaving other accounts which are associated with the same user vulnerable (e.g., in the case where a user is intentionally engaging in harmful activity, such as when a disgruntled employee tries to delete or copy company files, or when a user's security credentials are compromised and an outside hacker attempts to access multiple accounts associated with the user using a known password). While the discussion herein primarily focuses on accounts associated with internal users (e.g., employees of a company), it should be appreciated that accounts associated with external users may also be monitored. For example, if a questionable file is sent from a Gmail account of a third-party, an Outlook account of that third-party may be blocked or flagged for increased monitoring.

By taking action with respect to accounts associated with a user but not identified in the received log message data and which may be implicated in a future attack (e.g., an attack initiated from the account or the account is subjected to an attack), such future attack(s) may be thwarted thereby reducing the harm associated with a breach. For example, costs of data recovery may be avoided, trade secrets may be protected, personally identifiable information may remain secure, etc. These scenarios are by way of example in nature and it should be appreciated that countless additional scenarios may arise in which the presently described utilities may advantageously aid in preventing harmful occurrences.

In an aspect of the present disclosure, a method for use in monitoring one or more platforms of one or more data systems may include obtaining at a first processor, from a first database of a first identity and access management (IAM) platform, objects of at least first object classification of a plurality of object classifications, wherein the first database has a first plurality of unique identities of an organization and a first plurality of objects. The term "object" as used herein may generally refer to a data structure which includes any item of information contained in a unique identity and one or more classifications (e.g., labels) associated with the item of information. That is, each object may include any information which describes a particular entity (e.g., person). Each object may also have a classification assigned to it within the IAM platform. For example, name, phone number, hire date, termination date, etc. may be object classifications. It should be appreciated that any appropriate number of object classifications may exist.

One or more objects of the first plurality of objects may be associated with each of the unique identities of the first plurality of unique identities. The first plurality of objects may correspond to respective ones of the plurality of object classifications. Each unique identity may correspond to a specific person, group of people, etc. For example, each unique identity may include the name of a specific employee of the organization. The method may further include obtaining, from the first IAM platform, objects for the first plurality of unique identities of at least a second object classification of the plurality of object classifications. The first and second object classifications may be different. In this regard, the first IAM platform may host a variety of objects associated with each unique identity which describe or provide information related to the entity associated with the unique identity. The variety of objects may each have one or more object classifications (e.g., job title, address, phone number, etc.) which indicate the meaning or significance of the object. In other words, an object which includes "8881234567" may be unusable without an object classification of "phone number" which explains the significance of the character string in the object.

Further, the method may include generating, for each unique identity of the first plurality of unique identities, an identity profile with the respective obtained objects of the first and second object classifications corresponding to each unique identity. A first plurality of identity profiles is generated for the organization from the objects of the first IAM platform. The method may also include assigning an object type of a plurality of object types to each object in each of the plurality of identity profiles. The plurality of object types includes a first object type and a second object type. The assigning may be based on the respective object classification corresponding to each object. That is, an object type may be a label for the information in an object, for example, "entity name," "identifier," "attribute," or the like. Similar to the object classification, the object type describes what the object represents and may further describe what the object classification represents. In this regard, in most implementations, there will be fewer object types than object classifications as the object types group classifications together into categories.

The method may also include storing the first plurality of identity profiles in a second database and associating each identity profile with a different respective key. Such a key may have any appropriate form such as an alphanumeric character string, for example. Log message data that is received at a second processor, which may be the same as or different than the first processor, and that includes at least one of the objects of the at least first object type may be configured to be enriched with at least one respective key of a particular at least one of the identity profiles in which the at least one of the objects of the first object type is located. That is to say, when log message data is received which contains an object that is also found in a particular identity profile, the log message data may be enriched with the key that corresponds to that identity profile. In this regard, the key may provide access to the at least one identity profile by log message data processing rules that may be used to process the log message data.

In an embodiment, the method may include, before the obtaining steps, receiving, at the first processor and from a user interface (e.g., from a user interacting with a user interface), a selection of pairings of each of the at least first and second object types with each of the object classifications. The assigning step may proceed based on the received selection. In other words, a user may select on a user interface the object classifications associated with objects which are desired to be retrieved from the first IAM platform for use in generating the identity profiles. The selected pairings may indicate which object type(s) is to be assigned to each object classification. For example, a user may desire to retrieve objects from the IAM platform having an object classification of "email address" and other objects having an object classification of "login name." The user may also specify that the object classification of "email address" is to be assigned the object type of "identifier" and that the object classification of "login name" is also to be assigned the object type of "identifier." In this regard, identity profiles generated from the unique identities may include the obtained objects and may associated each obtained object with its object classification and an object type.

In another embodiment, each identity profile may include at least one first data structure defined by: the at least one object of the at least first object type; at least one object classification of the at least one object of the first object type; and the at least first object type itself. Each identity profile may also include at least one second data structure defined by: the at least one object of the at least second object type; at least one object classification of the at least one object of the at least second object type; and by the second object type itself. Each object may be a value, each object classification may describe the value, and each corresponding object type may describe the object classification. For example, the first data structure of a particular identity profile may be defined by a first object having a value of "john.doe@gmail.com," a first object classification of "email address," and a first object type of "identifier." The second data structure may be defined be a second object having a value of "Executive Vice President," an object classification of "Job Title," and an object type of "attribute." In this regard, each of the plurality of identity profiles may comprise data structures which can be utilized during processing of log message data associate a particular user (entity) with information in the log message data.

In yet another embodiment, the method may include after the generating step, second accessing the first IAM platform, obtaining additional objects corresponding to the first plurality of unique identities, and updating the first plurality of identity profiles with the obtained additional objects. In this regard, information pertaining to identities of an organization may be periodically added or updated in an organization's IAM platform(s). To ensure this information is reflected in identity profiles, it may be necessary to push updates from an IAM platform or to manually or periodically initiate an update. In some embodiments, the obtained additional objects may be of a third object type of the plurality of object types. As just one example, the first object type may be "identifier," the second object type may be "attribute," and the third object type may be "entity name."

The method may further include obtaining from the first IAM platform additional objects of at least a third object classification for the first plurality of unique identities. The generating may include generating the first plurality of identity profiles with the respective obtained objects of the third object classification corresponding to each unique identity. The plurality of object types may also include a third object type. It should be appreciated that identity profiles may not be limited to only three object types (e.g., entity name, identifiers, and attributes) but may include objects of fewer or additional types. In some instances, objects of a fourth type may be included in identity profiles.

In another embodiment still, identity profiles generated from the first IAM platform may be updated with objects from a second IAM platform. For example, the method may further include accessing a second IAM platform that includes a third database having a second plurality of unique identities of the organization and a second plurality of objects associated with each of the plurality of second unique identities. The second IAM platform may typically be another platform maintained by the organization but may alternatively be a third-party or vendor hosted platform. The method may include ascertaining that at least one of the unique identities of the second plurality of unique identities corresponds to at least one of the unique identities of the first plurality of unique identities. Such ascertaining will typically involve a determination that a unique identity of the first IAM platform corresponds to a user (e.g., employee, service account, host, etc.) that is also associated with a unique identity on the second IAM platform. In this regard, it should be appreciated that "unique" refers to identities on a particular IAM platform and does not preclude a related identity from existing on one or more other IAM platforms. In fact, in some instances, two identities on a single IAM platform may pertain to the same individual but may nevertheless be considered "unique" if the platform maintains the two identities separately, as may be the case if the platform has not identified that the two identities are common to a single individual. The method may further include obtaining, from the second IAM platform, objects of the second plurality of objects for the at least one of the unique identities of the second plurality of unique identities; and updating the at least one identity profile of the first plurality of identity profiles with the objects of the second plurality of objects.

Furthermore, an administrator may generate or update identity profiles, either manually or via import. That is, identifiers or attributes may be manually added to an identity profile on an individual basis. For example, upon hiring a new employee, an HR representative may assign the employee a security badge and manually generate an identity profile with the employee's name and badge number. Alternatively, a .csv, .txt, or other type of data file may contain a plurality of identifiers and/or attributes which may be imported into their respective identity profiles at the instruction of an administrator. In a similar regard, object classifications may be manually entered as well. For example, a data set may be imported which contains a listing of employee names (which can be used to identify respective identity profiles) in a first column and associated login names in a second column, but which lacks a description that the data in the second column is, in fact, login names. Accordingly, during the import process, the administrator may assign the object classification of "login name" to the data.

The ascertaining that at least one of the unique identities of the second plurality of unique identities corresponds to at least one of the unique identities of the first plurality of unique identities may include determining that the at least one unique identity of the second plurality of unique identities is identical to the at least one of the unique identities of the first plurality of unique identities. In other words, the unique identity of the first IAM platform and a corresponding unique identity of the second IAM platform may include the same objects, and in some situations, the same object classifications associated with those objects.

In another embodiment, identity profiles may be generated from objects of a second IAM platform similar to the manner in which identity profiles are generated from objects from a first IAM platform described above. For example, the method may include accessing a second IAM platform that includes a third database having a second plurality of unique identities of the organization and a second plurality of objects associated with each of the second plurality unique identities, obtaining from the second IAM platform objects of the first object classification for the second plurality of unique identities, obtaining from the second IAM platform objects of the second object classification for the second plurality of unique identities, assigning an object type to each object of the second plurality of objects based upon the respective object classification corresponding to each object of the second plurality of objects, generating for each unique identity of the second plurality of unique identities an identity profile with the respective obtained objects of the at least first and second object classifications. In this regard, a second plurality of identity profiles is generated for the organization from the second IAM platform. The second plurality of identity profiles may be stored in a fourth database. Each identity profile of the second plurality of identity profiles may be associated with a different respective key. Log message data received at a processor and that includes at least one of the second plurality of objects may be configured to be enriched with at least one respective key of a particular at least one of the second plurality of identity profiles in which the at least one object of the second plurality of objects of the first object type is located in order to provide access to the at least one identity profile of the second plurality of identity profiles by log message data processing rules.

In previous systems, two or more identities may exist for a single entity (e.g., user) and those identities may be processed independently without regard for the information contained in the other(s). For example, analysis of an identity for John Doe from one IAM platform is completed independent from an identity for John Doe from another IAM platform. This often leads to an incomplete analysis of incoming data because rules are processed using identities which do not include all information available within the data system. Therefore, in order to perform analyses with a more complete picture of each entity, some embodiments in accordance with the present disclosure may include merging an identity profile generated from the first IAM platform with a corresponding identity profile generated from the second IAM platform. In this regard, a resulting single identity profile may include all information known about an entity for more complete analysis of log message data. For example, the method may include ascertaining that at least one unique identity of the second plurality of unique identities corresponds to at least one unique identity of the first plurality of unique identities and merging the identity profiles based upon the ascertaining. The merging may include identifying objects in the at least one identity profile of the second plurality of identity profiles that are not present in the at least one identity profile of the first plurality of identity profiles and then updating the at least one identity profile of the first plurality of identity profiles with the identified objects. The ascertaining may include determining that the at least one unique identity of the second plurality of unique identities is identical to the at least one unique identity of the first plurality of unique identities. In some instances, after the updating of the at least one identity profile of the first plurality of identity profiles, the method may include deactivating the at least one identity profile of the second plurality of identity profiles. In this regard, duplicate identity profiles may be avoided.

Some embodiments may include updating the identity profiles of the first or second plurality of identity profiles with information identifying the first and second IAM platform from which the objects used to create the identity profiles were obtained. In this regard, a particular identity profile may contain information indicating that the identity profile was generated with objects sourced from the first IAM platform and a corresponding identity profile may contain information indicating that the corresponding identity profile was generated with objects sourced from the second IAM platform.

In yet other embodiments, the method may include receiving first log message data at a processor (which may be the same or different that the first and/or second processors mentioned above) and detecting that at least one of the objects of the first object type is present in the received first log message data. The method may then include identifying at least a first identity profile of the first plurality of identity profiles in which the at least one of the objects of the first object type is located and enriching the received first log message data with the respective key associated with the first identity profile. In this regard, the key may be appended to or otherwise associated with (e.g., via a table) the log message data. The method may further include processing the enriched first log message data with at least one processing rule using the respective key.

The processing the enriched first log message data may include receiving second log message data at the processor, detecting that at least one other object of the objects of the first object type is present in the received second log message data, identifying the first identity profile as including the at least one other object of the objects of the first object type, and enriching the received second log message data with the respective key associated with the first identity profile. Using the respective key may then include processing the enriched first and second log message data based on the respective key. In this regard, the first and second log message data may be processed in conjunction with one another as a function of both being associated with the first identity profile. In contrast, previous systems would fail to appreciate that the first and second log message data are related because the one of the objects of the first object type in the first log message data is different than the at least one other object of the first object type in the second log message data. For example, the first log message data may have an email address of the "identifier" object type and the second log message data may have a different email address of the "identifier" object type. In accordance with the present disclosure, one identity profile containing both email addresses would cause both instances of log message data to be considered in light of one another. Notably the object which leads to enrichment of the first log message data with the key may have the same or a different type than the object which leads to enrichment of the second log message data with the same key.

In some other embodiments, the processing the enriched first log message data may include using the respective key to access the first identity profile, reference at least one other object of the first object type with a first log message data processing rule, and trigger the first log message data processing rule based on the at least one other object of the first object type. In other words, an identity profile may be identified as containing a first object. The first log message data may then be enriched with the key corresponding to that identity profile. During processing, a log message data processing rule may access the identity profile and extract or reference a different object contained in the identity profile. This different object may cause the log message data processing rule to be triggered, by itself or in conjunction with other objects and log message data. In this regard, log message data which would not typically trigger a rule, may in fact trigger the rule based upon a first object in an identity profile causing a second object in the identity profile to be used during processing. This may lead to more robust analyses as a function of using identity profiles. Notably, it is also contemplated that some log message data processing rules may seek to identity a certain one or more of the keys included in identity profiles and may be triggered simply as a function of the key or keys being in the enriched log message data. For example, once a malicious user is identified, the key associated with the user's identity profile may be blacklisted such that any future detection of the key triggers one or more rules.

It should be appreciated that log message data may be enriched with the actual objects from identity profiles rather than merely enriching the log message data with a key that permits access to the objects. However, enriching the log message data with a key may be advantageous to improve confidentiality (e.g., the log message data does not actually have the objects associated with a particular person stored within it while being processed) and reduce bandwidth (e.g., log message data size will be smaller during subsequent transmissions as compared to including the additional objects).

In an example implementation of the method, the processing may include determining that the first log message data (which includes an identifier and an IP address) is indicative of a successful authentication onto a network of the organization from the IP address, and recording the IP address and the respective key of the identified at least one of the identity profiles in an inference database. The method may further include receiving second log message data at a processor, the same as or different than the processors described above, and detecting that the IP address is present in the received second log message data. In some instances, the second log message data may not include an identifier. However, the second log message data may nevertheless be associated with the respective identity profile by looking up the IP address in the inference database enriching the second log message data with the respective key as a function of the key being associated with the IP address in the inference database. Additionally or alternatively, the method may include receiving third structured indicative of a logoff from the network of the organization by the IP address and preventing subsequent enrichment of additional log message data with the respective key based on the logoff. This preventing may entail removing the IP address and the respective key of the identified at least one of the identity profiles from the inference database.

In an aspect of the present disclosure, a method for use in monitoring one or more platforms of one or more data systems may include receiving, at a processor, log message data over at least one communications network and processing the received log message data with a plurality of log message processing rules. During the processing an event may be generated based on a portion of the received log message data triggering a first log message data processing rule of the plurality of log message data processing rules. The portion of the received log message data may include a first object. The method may further include accessing, using a key identified in the received log message data, an identity profile comprising a plurality of objects associated with an entity, wherein the plurality of objects includes the first object and a second object. In response to the generating of the event, an action may be selected to be taken regarding the second object. The second object may not be included in the received log message data triggering the first log message data processing rule. In this regard, the action to be taken pertains to an object, or more specifically to an account associated with the object, that is not part of the received log message data. Rather, the action is in regard to an object that is only known (e.g., available) to the log message data processing rule as a function of the first object, which is contained in the log message data, leading the rule to the identity profile. Finally, the method may include taking the selected action.

In some embodiments, the first object includes a first identifier which includes an indication that the portion of log message data corresponds to the entity. The second object may include a second identifier. Each of the first and second identifiers may comprise an alphanumeric character string. In other embodiments, the second object may include an attribute which includes a characteristic of the entity.

In another embodiment, a method may further include establishing a baseline behavior associated with an identity profile; and storing the baseline behavior for reference by one or more log message data processing rules. In this regard, a baseline behavior may be based upon occurrence data which may include records and details of particular occurrences which have transpired on devices in operative communication with the data network. Some or all of the occurrence data may indicate normal, standard, or mundane behavior of the user associated with the identifier(s) of the identified portions of the log message data. In this regard, as occurrence data associated with an identity profile is retrieved and integrated, a baseline behavior representing normal or acceptable user behavior may be established for use in further monitoring. That is, later received occurrence data may be compared to the baseline behavior which is established based upon historical occurrence data. A log message data processing rule may be triggered when a condition of the rule is satisfied based on the comparing. In other words, as recent occurrence data is received and processed, it may be compared against the baseline behavior to determine whether or not the recent occurrence data is suspicious relative to the baseline behavior.

In accordance with the present disclosure, a baseline behavior may be maintained relative to a specific identifier or other object, but may also be maintained relative to two or more objects of an identity profile or even multiple identity profiles. For example, a baseline behavior noting acceptable login times may be established for single employee of an organization. Regardless of whether the user logs in from a home IP address (identifier) or work IP address (identifier), the baseline behavior may be maintained. At the same time, two other baseline behaviors may also be maintained for monitoring of each discrete IP address. That is, a baseline behavior for home login times and a baseline behavior for work login times. Moreover, the employee's login times may also contribute to a login time baseline behavior for the entire company. That is, one baseline behavior may be maintained which is used for monitoring typical login times for all identity profiles of an organization (e.g., all employees). The individual employee's login time baseline behavior and the organization's login time baseline behavior may each be evaluated independently against log message data processing rules or, in some instances, a log message data processing rule may compare a login time from occurrence data to both the organization's and the employee's login time baseline behaviors. Further, the employee's baseline behavior may be compared to the organization's baseline behavior to determine whether or not the employee's activities are drifting outside of an acceptable range based on standard behavior.

Each rule may comprise at least one condition and at least one action. In essence, a rule may be considered an If-Then statement -- the condition being the "If' and the action being the "Then." The condition may comprise any function of Boolean logic to return a true or false answer (e.g., 0 or 1, yes or no). When the Boolean operation returns a value of true, the condition is said to be satisfied. In response, the action(s) may be implemented automatically or may be forwarded to, e.g., an event manager for implementation.

A further embodiment may include receiving additional log message data; identifying portions of the additional log message data comprising recent occurrence data associated with the identity profile; and updating the baseline behavior with the identified portions of the additional log message data. In this regard, when recent occurrence data is received which does not appear to be suspicious, the baseline behavior may optionally be updated based upon the recent occurrence data. This process may result in a baseline behavior which is dynamic in order to evolve with changes in user activity. For example, a steady increase in file transfer sizes associated with a user over a long period of time may not necessarily indicate dubious behavior but may simply be commensurate with a trend of growing file sizes. By tweaking the baseline behavior over time, false alarms may be prevented.

The method may include searching through log message data for identifiers which are unknown. Standard formats may be utilized which are indicative of an identifier (e.g., "XXXX.YYYYY" or "Xxxxx Yyyyy"). In this regard, an identity profile may be established for a previously unknown user upon discovering a first instance of an identifier associated with the user. For example, if a new employee is hired, the method may facilitate automatic generation of an identity profile for the new employee upon first recognizing a new user based on an identifier in a portion of log message data.

The baseline behavior may include one or more of: a range of login times; a maximum file transfer size; an IP address from which the user accesses the at least one communications network; and a maximum number of login attempts. The event (which reflects one or more occurrences) may include at least one of: at least one failed login attempt; a time associated with a login attempt; attempted access from a banned IP address; attempted access to an unauthorized IP address; attempted access to an unauthorized file; a size of a file transfer; a financial transaction; and contents of a message. The triggering may include identifying that the portion of log message data satisfies a condition of the first log message data processing rule.

In another embodiment, the action may include at least one of: disabling an account associated with the second object; suspending access to the at least one communications network from account associated with the second object; increasing monitoring of the account associated with the second object; classifying the account associated with the second object as high risk; generating an alert for processing in relation to the account associated with the second object by a remote platform; and transmitting an alert to an analyst for manual assessment of remedial action in relation to the account associated with the second object. It should be appreciated that these actions are by way of example only and any appropriate response to a generated event may be considered within the scope of this disclosure.

In yet another embodiment, the method may include assigning a risk level to the event. The action may be selected based at least in part upon the assigned risk level. Furthermore, a security level may be assigned to the account associated with the first object and the action may be selected based at least in part upon the assigned security level. Additionally or alternatively, a security level may be assigned to the account associated with the second object and the action may be selected based at least in part upon that assigned security level. In some instances, an action to be taken regarding the account associated with the second object may be different than an action selected to be taken regarding the account associated with the first object. In this regard, each event and/or each account may be associated with a risk level or security level and actions to be taken may be dependent upon these assigned levels. For example, an event which indicates a clear and direct threat may be assigned a risk level which is different than a risk level assigned to an event which may indirectly hint at a potential threat (notably, risk levels may be assigned directly to occurrences, rather than or in addition to risk levels assigned to resultant events, as log message data is received). Similarly, an account which provides access to, e.g., secured trade secrets or personally identifiable information may have a security level which is greater than a security level of an account which merely provides access to unprotected data, e.g., public information. Actions to be taken may be selected using a rule or rules which identify the risk level of the event and/or the security level of the account(s) identified in the portion of the log message data triggering the first log message data processing rule and/or other accounts not identified in the portion of log message data. As an example, a low risk event on a low security account may nonetheless result in disabling a high security account owned by the user that is not identified in the portion of log message data based on the risks associated with the potential compromisation of a high security account. A low security account associated with the same user that is not identified in the portion of log message data may be permitted to continue functioning as usual based on a low perceived risk associated with that account becoming compromised. However, a rule may indicate that a low security account not identified in the portion of log message data should be associated with an action of increased monitoring. In this regard, as a function of being associated with a user who has had one or more accounts breached as identified in the portion of log message data, accounts not identified in the portion of log message data may be closely watched such that future breaches may be quickly detected and remedied. For example, accounts flagged for additional or increased monitoring may be subject to rules having reduced thresholds or modified baseline behaviors which are therefore more sensitive to abnormal behavior.

In another aspect of the present disclosure, a method for use in monitoring one or more platforms of one or more data systems may include: receiving, over at least one communications network, log message data generated by one or more platforms in operative communication with the at least one communications network; determining, at a processor, that a portion of the log message data identifies a first account of a plurality of accounts accessible over the at least one communications network and associated with a user. Data associated with the plurality of accounts may be stored in an identity profile corresponding to the user. The method may further include: processing the portion of log message data with a plurality of event rules; generating, based on occurrence data within the portion of log message data triggering at least a first event rule of the plurality of event rules, an event associated with the first account; and taking, in response to the generating of the event, an action regarding a second account of the plurality of accounts associated with the identity profile of the user. The second account may or may not be identified in the portion of log message data triggering the first event rule.

An additional step in the method may include, before the taking the action, selecting the action. In some instances, selecting the action may include identifying an action specified by a log message data processing rule.

In another aspect of the present disclosure, a method for use in monitoring one or more platforms of one or more data systems may include: obtaining at a first processor, from a first database of a first identity and access management (IAM) platform, a first object of a first object classification of a plurality of object classifications, where the first object is associated with a first unique identity; obtaining, from the first database, a second object of a second object classification of the plurality of object classifications, the first and second object classifications being different; generating, for the unique identity, an identity profile with the obtained first and second objects; assigning, based upon the respective first or second object classification, a first or second object type of a plurality of object types to each of the first and second objects; storing the identity profile in a second database; associating the identity profile with a key; receiving, at a second processor the same or different than the first processor, log message data over at least one communications network; determining that the received log message data includes the first object; enriching, based on the determining, the received log message data with the key; processing the received log message data with a plurality of log message processing rules; generating an event based on a portion of the received log message data triggering a first log message data processing rule of the plurality of log message data processing rules, wherein the portion of the received log message data comprises the first object; accessing, using the key of the enriched log message data, the identity profile; selecting, in response to the generating of the event, an action to be taken regarding the second object, wherein the second object is not included in the received log message data triggering the first log message data processing rule; and taking the action.

In addition to the example aspects and embodiments described above, further aspects and embodiments will become apparent by reference to the drawings and by study of the following description.

### BRIEF DESCRIPTION OF THE DRAWINGS

A further understanding of the nature and advantages of the present teachings may be realized by reference to the remaining portions of the specification and the drawings, wherein like reference labels are used through the several drawings to refer to similar components.
**Fig. 1** illustrates an architecture for implementation of an embodiment.
**Fig. 2** is a flow diagram of a method for generating identity profiles using identities from an IAM platform and enriching log message data.
**Fig. 3** is a flow diagram of a method for generating identity profiles from multiple IAM platforms.
**Fig. 4A** illustrates two examples of IAM platforms housing databases for storage of unique identities associated with users.
**Fig. 4B** provides a more specific example of an IAM platform as illustrated in Fig. 4A.
**Fig. 4C** illustrates an example of a database for storing identity profiles as may be generated from an IAM platform of Fig. 4A.
**Fig. 4D** provides a more specific example of the database illustrated in Fig. 4C.
**Fig. 5** illustrates an example use of identity profiles for enriching log message data.
**Fig. 6** illustrates another example use of identity profiles for enriching log message data and implementing a comprehensive response.
**Fig. 7** is a block diagram of a system for handling identified occurrences and events.
**Fig. 8** illustrates a number of example rules that may utilized in various embodiments of the present teachings.

### DETAILED DESCRIPTION

Disclosed herein are utilities (e.g., methods, systems, and apparatuses) for generating and maintaining identity profiles which may be used to enrich log message data for identifying occurrences of interest regarding one or more user accounts and implementing remedial policies with respect to other accounts associated with the same user. In this regard, attempted malicious activity may be limited by implementing remedial policies on a wide range of accounts associated with a user that is, in turn, associated with a suspicious event. Enrichment of log message data may include appending additional information to the log message data, or otherwise associating the additional information with the log message data, the additional information including objects not initially contained in the log message data.

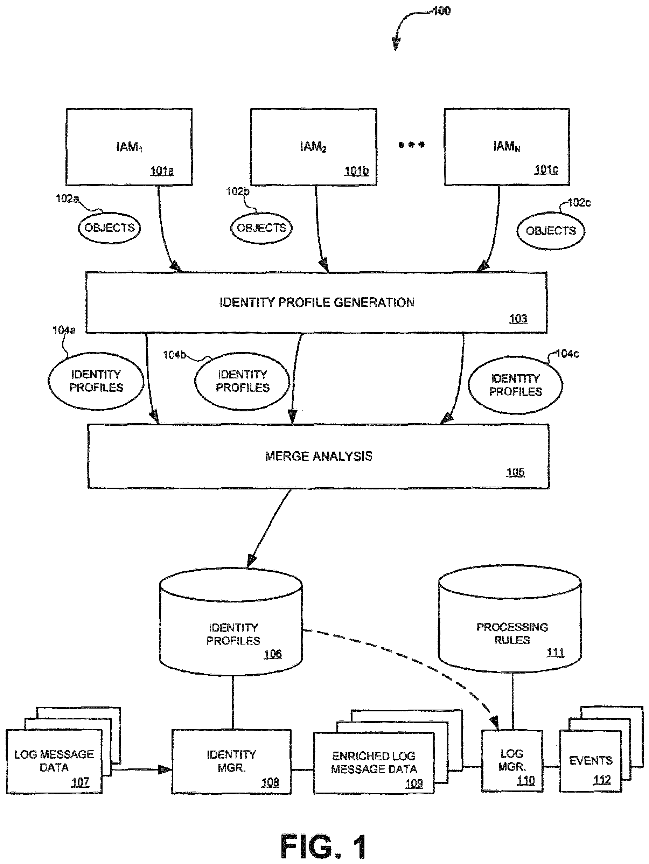

**Fig. 1** illustrates one representative architecture in which such utilities may be deployed, although it is to be understood that the disclosed utilities may be utilized in numerous other contexts as well. For instance, the architecture 100 may be associated with the disclosure of U.S. Patent No. 8,543,694 which is assigned to the assignee of the present application.

A plurality of Identity and Access Management ("IAM") platforms 101 may each host a plurality of unique identities. Each of the unique identities may correspond to a particular entity (e.g., an employee) and may include or be associated with one or more objects 102. The objects 102 may each include an alphanumeric character string and an object classification. A variety of object classifications are anticipated, such as "email address," "login name," and/or "job title."

Objects 102 may be extracted from the IAM platforms 101 using one or more processors for use during identity profile generation 103, which may occur at the same or a different processor. An instruction may be sent to the IAM platforms 101 requesting identity and/or object data or the IAM platforms 101 may periodically push data. Generation of identity profiles 104 may entail creating data structures and storing them in a memory, each data structure defined by the object value and object type of a particular object. Object type may include "identifier," "attribute," and/or "entity name" or the like. In this regard, an identifier may be any information which is informative as to which identity profile an instance of log message data may be related (e.g., an email address, a name, or a source, such as an IP address), an attribute may be any information which describes a characteristic of the entity (e.g., first name, last name, job title, etc.), and the entity name may be a title for the identity profile (e.g., the entity's legal name). Each identity profile 104 may also include a key which distinguishes the particular identity profile 104 from the other identity profiles.

After a plurality of identity profiles 104 have been generated, a merge analysis 105 may occur at one or more processors to reduce or eliminate duplicate or related profiles. In one arrangement, merging 105 may include executing one or more instructions from a memory module for extracting data structures from one identity profile associated with a unique identity, e.g., identity profile 104a, and adding them to another identity profile associated with the unique identity, e.g., identity profile 104b. In such an instance, identity profile 104a may be deactivated or deleted. Merging may alternatively include combining two identity profiles into a new identity profile and deactivating or deleting the original two identity profiles. Further, merging may include retaining two or more identity profiles but providing a link, in one or more identity profiles, to the other identity profile(s). In any regard, merged identity profiles (e.g., resultant of the merging) may be stored in memory while obsolete identity profiles (e.g., those from which contents have been extracted and added to another identity profile) may be deleted from the memory. Identity profiles may be stored in identity profile database 106 for later use during log message data processing. It is contemplated that identity profiles 104 may be stored in any appropriate format.

An identity manager 108 may receive one or more instances of log message data 107. Such log message data 107 may include, or may be generated from, one or more log messages. The log message data 107 may be generated by various types of devices. For example, log message data may stem from a computer (e.g., server, desktop, notebook, laptop, mobile device, computer workstation, printer, mainframe system, etc.) that is operable within a computer network configuration. In this regard, the computer may be responsible for delivering applications to other devices or processes within the computer network, administering communications among computers within the computer network, controlling various features of the computer network, and the like. In the process of performing these functions, although partially dependent upon the number of computers within the network, the computer may generate thousands, millions, etc. of log entries per day. To illustrate, when a user incorrectly attempts to logon to a single computer on the computer network, the computer may generate a log entry noting a particular time (e.g., timestamp) that an improper procedure was performed. Other examples of occurrences or developments that may cause the generation of log messages include, inter alia, application launch failures, audit activity, attacks, operating system errors, download requests, file transfers, e-mail exchanges, and the like.

While the log message data 107 may be in the form of log messages or entries generated by or gleaned from various network devices, the log message data 107 may take numerous other forms as well. For instance, host forensic data such as file integrity information, process information, data transfer information, dataflows (i.e., recalculated values for dependent variables that depend on one or more changing independent variables), packet dumps, content inspection, and the like.

The identity manager 108 may distinguish an identifier from other information within the log message data 107. The identity profile database 106 may then be referenced to locate which particular identity profile(s) 104 includes that identifier. A key indicative of the particular identity profile(s) 104 may then be extracted from the identity profile 104 and appended to the related instance(s) of log message data 107, thereby generating enriched log message data 109. In addition or as an alternative to utilizing a key, one or more data structures or values from the pertinent identity profile 104 may be extracted and appended to the log message data 107 to create the enriched log message data 109.

A log manager 110, or other data processing unit(s), may receive the enriched structure data 109. The log manager 110 may then proceed to process the enriched log message data 109 using a plurality of processing rules stored in processing rules database 111. One or more of the log processing rules may instruct the log manager 110 to retrieve or reference additional information found in an identity profile 104, or the log manager 110 may retrieve all information from the identity profile 104 prior to executing one or more rules. In this regard, the key may be used by the log manager 110 to access objects associated with the identity profile 104 in identity profile database 106. In one arrangement, the log manager 110 may communicate with the identity manager 108 for retrieval of identity profile data rather than accessing the identity profile database 106 directly, although it is also contemplated that the identity manager 108 and log manager 110 may be a single processing platform in some embodiments. Processing of enriched log message data 109, with reference to objects associated with or stored in identity profiles 104, may lead to generation of events 112. These events 112 may cause precautionary or remedial actions to be implemented.

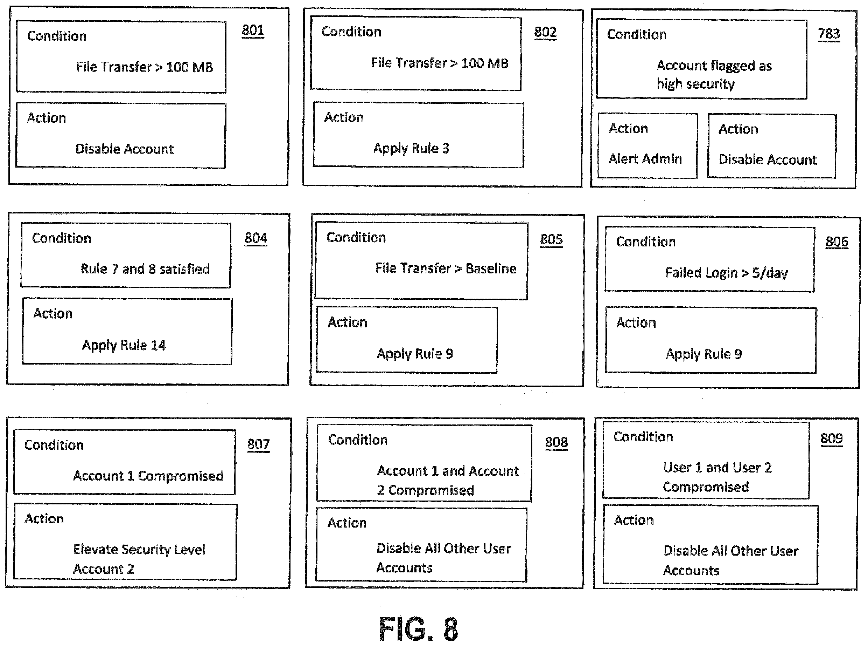

In the system 100, each log manager 110 may broadly be configured to process received enriched log message data 109 against any appropriate rules (e.g., example rules illustrated in Fig. 8) to identify a subset of data (e.g., reflecting occurrences) that may be considered interesting to organizational analysts for various reasons. In one arrangement, each illustrated log manager 110 may be configured with a server process referred to as a message processing engine ("MPE") that is responsible for processing each piece or segment of enriched log message data 109 against the rules of rules database 111. Upon enriched log message data 109 triggering a particular rule, the MPE may automatically parse or obtain information from the log message data 109 and populate one or more corresponding data or reporting fields in a data structure according to instructions in the particular rule. The original (e.g., raw) data and populated data fields may together define an event 112 that may be stored and made available to analysts, other system processes, and the like in any appropriate manner.

Processing rules 111 may also specify one or more additional actions the log manager 110 is to take upon enriched log message data 109 matching or triggering a processing rule such as archiving the data in any appropriate archival data store, reporting, forwarding the log message data to (e.g., or otherwise triggering or alerting) an event manager to determine whether one or more actions should be taken (e.g., by processing log message data against any appropriate rule(s), and/or the like). The log manager 110 and event manager may transmit log message data, events, alerts and/or other data or messages to one or more third-party products by way of any appropriate third-party services. Representative examples of log managers and event managers, and the like that may be used in conjunction with the system 100 may be found in U.S. Patent No. 7,653,633 and U.S. Patent Application Nos. 13/175,674, 13/175,677, and 15/179,342.

In one arrangement, the system 100 may include one or more log manager(s) 110 and/or event manager(s) broadly operable to analyze and process log message data 107 and enriched log message data 109 using one or more processing rules to detect what may be complex occurrences/conditions/developments/etc. In this regard, it will be appreciated that, in the context of rules-based processing, the analytics platform is not limited to use of traditional notions of "correlation." A log manager 110 may be configured to conduct one or more types of quantitative, correlative, behavioral and corroborative analyses to detect occurrences from one or more disparate data sources, even when the data generated by the data sources may otherwise be considered unimportant or non-relevant when considered in isolation. In one arrangement, the log manager 110 may be configured to parse data/determine metadata and populate corresponding data fields that may be considered events that may be stored and/or forwarded to an event manager as appropriate. In one embodiment, the log manager 110 may be in the form of an advanced intelligence engine as disclosed in U.S. Patent No. 8,543,694 which is assigned to the assignee of the present application.

Log manager 110 may be in operative communication with rules database 111, which may be integral to the log manager 110, for access to one or more pools of rules. One set of rules in rules database 111 may be directed to generation of events in response to identification of occurrences of interest. In this regard, the rules may include conditions for identification of certain occurrences which indicate a confirmed or potential threat and remedial actions to take. Certain rules may pertain to actions to be taken with respect to compromised accounts and other rules (or the same rules) may pertain to actions to be taken with respect to accounts which are not compromised (e.g., not identified in the log message data leading to generation of an event).

Identity manager 108 may house or be in operative communication with a plurality of identity profiles. During analysis of log message data indicating a compromised identifier (e.g., email address) or account associated therewith (e.g., primary email account), an identity profile may be used to identify additional accounts (based on identifiers) associated with the same user or group of users in order to implement precautionary measures with respect to those additional accounts (e.g., secondary email account or Active Directory account). Upon selection of appropriate action(s), an event manager may implement such action.

It should be appreciated that the various functions mentioned herein in relation to identity manager 108, log manager 110, and an event manager, may be performed in the distributed manner described or may be consolidated into a single processing platform. The illustrated embodiment is by way of example only and should not be considered to limit the scope. That is to say, log manager 110 may perform the tasks described herein as being performed by identity manager 108 (e.g., identifying objects in log message data, enriching log message data with a key, etc.). Alternatively, tasks described in relation to identity manager 108 may be performed by two or more distinct platforms such as an identity manager, which performs generating, merging, and updating identity profiles, and a message processing engine (not shown, may be part of log manager 110), which performs enriching the log message data with a key.

An example system architecture will now be described, although it should not be considered limiting as it is merely one example. An identity sync client may be disposed on-premises at an organization and may be in operative communication with the organization's data network, including an IAM platform such as Active Directory. The identity sync client may be configured to receive identities and objects 102 from one or more third-party IAM platforms 101 (e.g., cloud hosted IAM platforms). Identities and/or objects 102 from Active Directory and other third-party IAM platforms 101 may be sent from the identity sync client to a platform manager which includes identity profile database 106 and one or more processing platforms for generation of identity profiles 104 and merge analysis 105. The platform manager may be disposed on-premises or may be disposed remotely, for example, at a host site of a third-party vendor. The identity profile database 106 may be accessible by the identity sync client via an application programming interface. Log manager 110 and processing rules database 111 may be disposed on-premises or may be part of a platform manager disposed off-site. In this regard, events 112 may be generated on-premises or may be generated remotely by an identity management vendor and transmitted back to the organization's data network for implementation of an appropriate response.

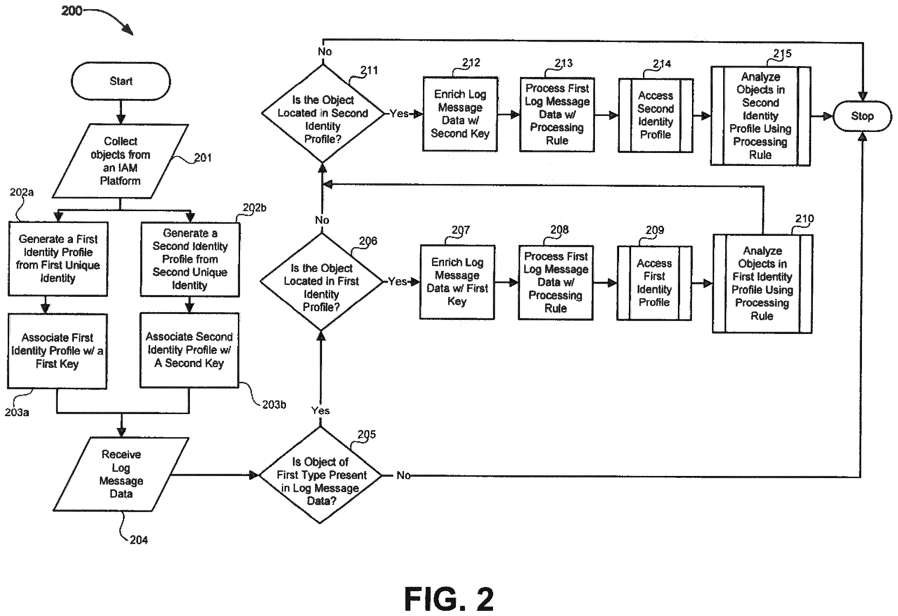

**Fig. 2** is a flow diagram of a method 200 for generating identity profiles using identities from an IAM platform and enriching log message data based on the generated identity profiles. Initially, objects (such as objects 102 of Fig. 1) may be collected 201 from an IAM platform (e.g., 101). A first and a second identity profile (e.g., 104) may be generated, 202a, 202b respectively, from first and second unique identities. Each of the first and second identity profiles may be associated 203a, 203b with first and second keys, respectively. After receiving 204 log message data, it may be determined 205 whether or not an object of a first object type (e.g., identifier) is present in the log message data. If there are no objects of the first object type, the method may terminate and the log message data may be forwarded for processing by log manager 110 of Fig. 1. If there is an object of the first object type found in the log message data, it may then be determined 206 whether or not the object is located in the first identity profile. If the object is located in the first identity profile, the log message data may be enriched 207 with the first key. Accordingly, the log message data may be processed 208 with one or more processing rules. The processing 208 may include accessing 209 the first identity profile and analyzing 210 objects in the first identity profile (and/or the key itself) using the one or more processing rules.

There are numerous ways in which identity profiles may be used during the processing of log message data with log message data processing rules. In one example, the processing 208 may include determining that the log message data is indicative of a successful authentication onto a network from a certain IP address and recording the IP address, and/or the respective key, in an inference database that can be used for lookup operations at a later time. For example, upon receipt of additional log message data, it may be detected that the IP address is present in the additional log message data. As a function of identifying the IP address is present in the inference database, the additional log message data may be enriched with the key. Further, an indication may be received that the user at the IP address has logged off from the network. In response, the processor may be prevented from subsequently enriching log message data with the key. For example, the IP address and/or key may be deleted from the inference database such that further instances of log message data processing are unable to locate the IP address in the inference database. Alternatively, an indication of logoff may be recorded in the inference database and associated with the instance.

Whether or not the determining 206 yields that the object is located in the first identity profile, it may be determined 211 whether or not the object is located in the second identity profile. If yes, then the log message data may be enriched 212 with the second key such that the log message data may be processed 213 with one or more processing rules by accessing 214 the second identity profile and analyzing 215 objects in the second identity profile. It should also be appreciated that the object may be located in both the first and second identity profiles, in which case the first and second identity profiles may be evaluated to determine whether or not they should be merged. In some cases, an instance of log message data may have a first object pertaining to a first identity profile and a second object pertaining to a second identity profile. This situation may arise, for instance, when the log message data identifies an originating identifier and a recipient identifier, as may be the case with an e-mail. In such a situation, the log message data may be enriched with both the first key and the second key.

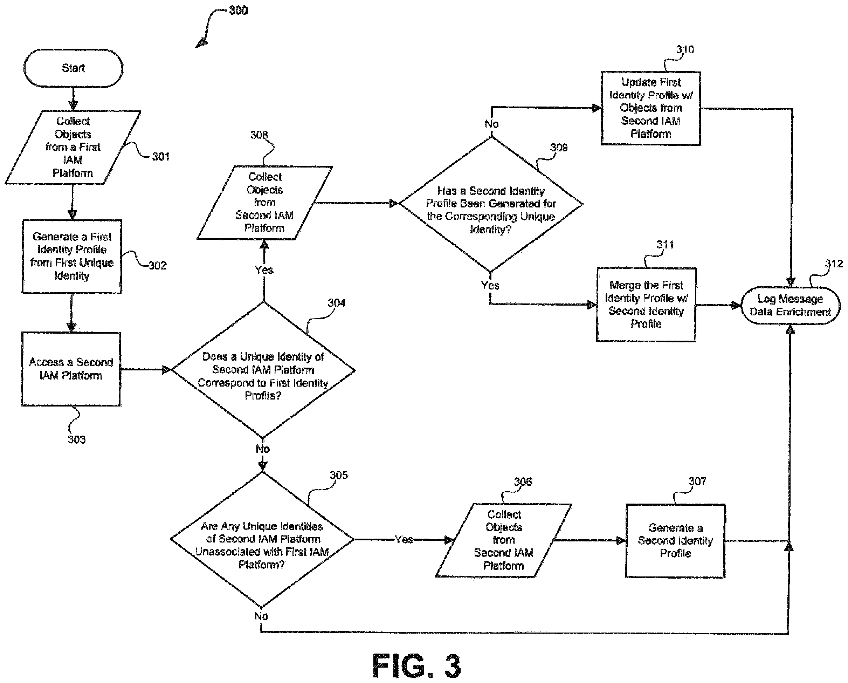

**Fig. 3** is a flow diagram of a method 300 for generating identity profiles from multiple IAM platforms (e.g., 101a-101c). Initially, objects (e.g., 102a-102c) may be collected 301 from a first IAM platform and a first identity profile (e.g., 104) may be generated 302 based upon a first unique identity of the first IAM platform. Upon accessing 303 a second IAM platform, it may be determined 304 whether or not a unique identity of the second IAM platform corresponds to (or "matches") the first identity profile. There are several ways this determination 304 may be executed. For example, determination 304 may include identifying an object of the first identity profile that is also associated with a unique identity of the second IAM platform. For example, an object from the first identity profile having an "identifier" type may have a value of "john.doe@gmail.com" which is also found to be associated with the unique identity having the entity name "John Doe" of the second IAM platform. These objects may be compared to one another to determine a match. Further, information from one identity profile or unique identity need not be identical to information from another to determine there is a match. Rather, similarities may be identified (e.g., using heuristic logic) which are sufficient to determine a match. For example, the title of "John D. Doe" in a unique identity of the second IAM platform may be determined to be similar to an identifier object of "john.d.doe@outlook.com" in the first identity profile such that a match is established.

A "yes" answer to determination 304 may cause objects not already present in the first identity profile to be collected 308 from the second IAM platform for addition to the first identity profile. Before or after the collecting 308, it may be determined 309 whether or not a second identity profile has been generated for the corresponding unique identity. In other words, at the point in time that determination 304 is made, a second identity profile may have already been generated from the objects from the second IAM platform. If a second identity profile has, in fact, already been generated, then the first identity profile and the second identity profile may be merged 311 (e.g., by combining the objects from both identity profiles into a single new identity profile). If not, the first identity profile may be updated 310 with objects from the second IAM platform which are associated with the unique identity that corresponds to the first identity profile.

Alternatively, if determination 304 yields that there are no unique identities of the second IAM platform that correspond to the first identity profile, it may be determined 305 whether or not any unique identities of the second IAM platform are not associated with any other unique identities of the first IAM platform. In other words, it may be determined whether the second IAM platform has any unique identities that are not represented in the first IAM platform, or whether the second IAM platform merely includes the same unique identities. If determination 305 yields one or more unique identities of the second IAM platform that are unassociated with the first IAM platform, objects may be collected 306 from the second IAM platform and a second identity profile (and potentially more) may be generated 307. If determination 305 yields no unique identities of the second IAM platform that are unassociated with the first IAM platform, the method may proceed directly to log message data enrichment 312. Ultimately, whether or not one or more identity profiles are updated 310, merged 311, or generated 307, the method may proceed to log message data enrichment 312 and subsequent processing as described in relation to Figs. 1 and 2.

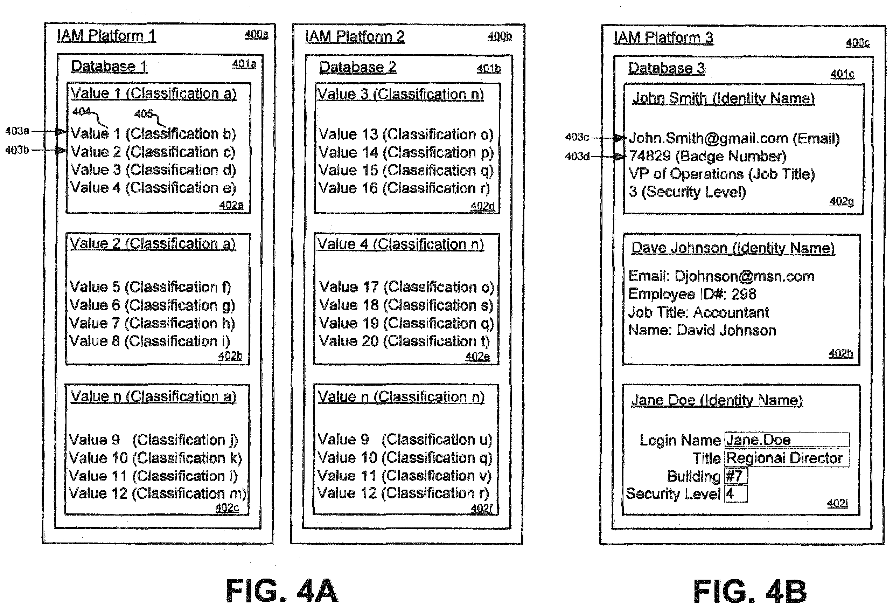

**Fig. 4A** illustrates two examples of IAM platforms housing databases for storage of unique identities associated with users. IAM platform 400a includes database 401a (and may include additional databases which are not illustrated). Database 401a includes a plurality of unique identities 402a-402c. Each unique identity 402 includes any number of objects (e.g., objects 403a, 403b), each of which comprises a value 404 and a classification 405.

Similarly, IAM platform 400b includes database 401b having a plurality of unique identities 402d-402f. A merge analysis (such as merge analysis 105 of Fig. 1) may determine that unique identity 402c is identical to unique identity 402f. In other words, they both have the same objects (same number of objects, same values of objects, and same types of objects). Such a determination may cause duplicate identity profiles to be generated, or in the alternative, if IAM platforms 400a and 400b are used simultaneously to generate identity profiles, recognition of the fact that unique identities 402c and 402f are identical may result in a single identity profile being generated for both unique identities.

**Fig. 4B** provides an example of an IAM platform 400c. IAM platform 400c includes database 401c which includes unique identities 402g-402i, each having various objects (e.g., objects 403c, 403d), each object having a corresponding object classification. In the illustrated embodiment, database 401c may be the same as or similar to database 401b of IAM platform 400b of Fig. 4A. In other words, the unique identities 402g-402i may be specific examples of unique identities 402d-402f. For example, "Classification n" of Fig. 4A corresponds to "Identity Name" of Fig. 4B.

As illustrated in Fig. 4B, unique identities may store objects and associated object classifications in any appropriate format or manner. For example, unique identity 402g uses a label presented in parentheses, unique identity 402h uses colon separation, and unique identity 402i uses fields with labels (e.g., Building) and inserted field values (e.g., #7). These formats are intended to be by way of example only and should not be considered as limiting the scope of this disclosure. Rather, any appropriate data formatting may be utilized.

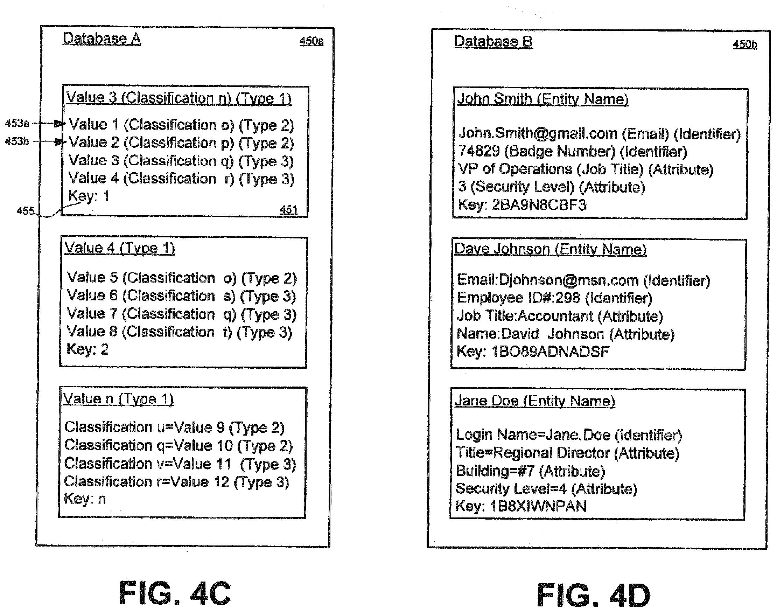

**Fig. 4C** illustrates an example of a database for storing identity profiles as may be generated from an IAM platform of Fig. 4A. Database 450a includes three identity profiles, including identity profile 451, which correspond to the three unique identities of IAM platform 400b of Fig. 4A. As illustrated the objects 403a, 403b of unique identity 402d are represented as data structures 453a, 453b of identity profile 451 which convey the object values, object classifications, and object types. Additionally, a key is appended to each identity profile such as key 455 of identity profile 451.

A detailed example of the information which may be found in database 450a is shown in example database 450b of **Fig. 4D****.** As with unique identities, objects and their associated classifications and types may be stored in identity profiles in any appropriate manner. For example, labels, tags, tables, Boolean operations, etc. As illustrated in Fig. 4D, a typical data structure of an identity profile will include the object and corresponding object classification as extracted from a unique identity (although the formatting may be altered) as well as an object type that is associated with the object classification. For example, in database 401c of Fig. 4B, object 403c has a corresponding object classification of "Email." In database 450b of Fig. 4D, that object is stored with the "Email" classification as well as the "Identifier" object type.

Object types may be selected and associated with objects in a variety of manners. In some instances, a user may pair object classifications with object types using a user interface (e.g., drop down menus and the like). Based on selected pairings, a processor may automatically associate an object type with objects having specified object classifications. For example, a user may input that email addresses and badge numbers are to be considered identifiers and that job titles and security levels are to be considered attributes. According to such an input, when identity profiles are generated, the processor may associate the respective object types with each object based on the object classification of each object. In other instances, common object classifications may be automatically paired to object types based on pre-loaded or pre-selected pairings that are included in the system. For example, email addresses may always be considered identifiers such that no selection by a user is needed.

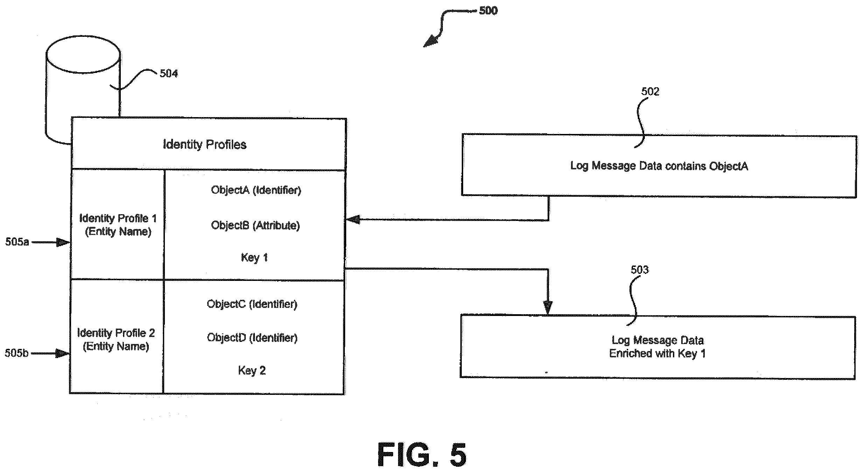

**Fig. 5** illustrates an example use 500 of identity profiles for enriching log message data. In the example given, log message data contains an object having ObjectA 502. The log message data may be received at an identity manager, such as identity manager 108 of Fig. 1, a log manager, or another processing platform or service. The identity manager scans the identity profile database 504 for one or more identity profiles which contain ObjectA. In some instances, the scanning may include scanning for both the value (ObjectA) and the type (identifier). In the illustrated example, the identity manager would determine that identity profile 505a contains and identifier having ObjectA and would therefore enrich 503 the log message data with the key associated with identity profile 505a, specifically Key 1. In this regard, processing rules (or more specifically, the log manager implementing the processing rules) used to analyze the log message data may be enabled with access to identity profile 505a to extract further information such as additional identifiers or attributes related to the relevant identity (e.g., person). In one arrangement, and rather than amending the actual log message data with the key, new log message data may be created which includes the information from the original log message data plus information from the user profile, such as Key 1 or ObjectB.

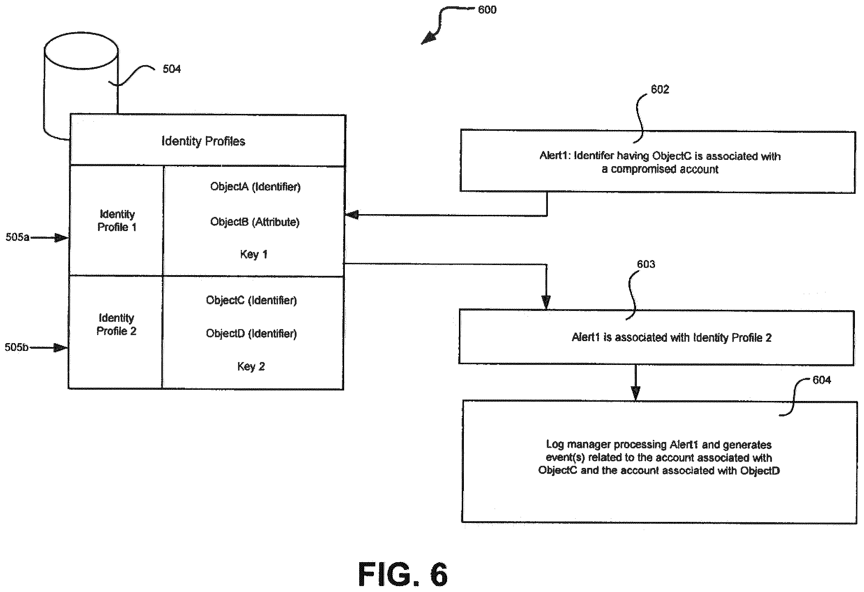

**Fig. 6** illustrates another example use 600 of identity profiles for enriching log message data and implementing a comprehensive response. Traditional monitoring systems are often configured to take action with respect to identifiers recognized in log message data leading to an event but they fail to implement preventative measures in relation to identifiers that are not identified in the log message data leading to the event. Other accounts associated with the user and/or organization may remain vulnerable, presenting an opportunity for a further breach. Advantageously, methods of the present disclosure enable actions to be taken with respect to identifiers stored in an identity profile rather than only the identifier that is associated with the event of interest. For example, in Fig. 6, Alert1 may be received from a system monitor or other processing platform indicating that a particular account associated with an identifier having ObjectC has been compromised (e.g., excessive file download exceeding a threshold value) 602. The alert may be, for example, an event, log message, or other log message data. Based on ObjectC, it may be determined by scanning the identity profiles in identity profile database 504 that ObjectC is associated with identity profile 505b. Accordingly, Alert1 may be associated 603 with identity profile 505b, such as by appending Key 2 to Alert1. As a function of the association, it may be determined that other accounts associated with the entity but which were not part of the alert (e.g., the account associated with ObjectD) are to be disabled, subjected to additional monitoring, etc. For instance, in the illustrated example, the account associated with ObjectC was compromised according to Alert1 and therefore in step 604, that account is associated with one or more generated events. Furthermore, as a function of being associated with the identity associated with that account, another account (identified by ObjectD) is also disabled to prevent further harm stemming from the potential threat.

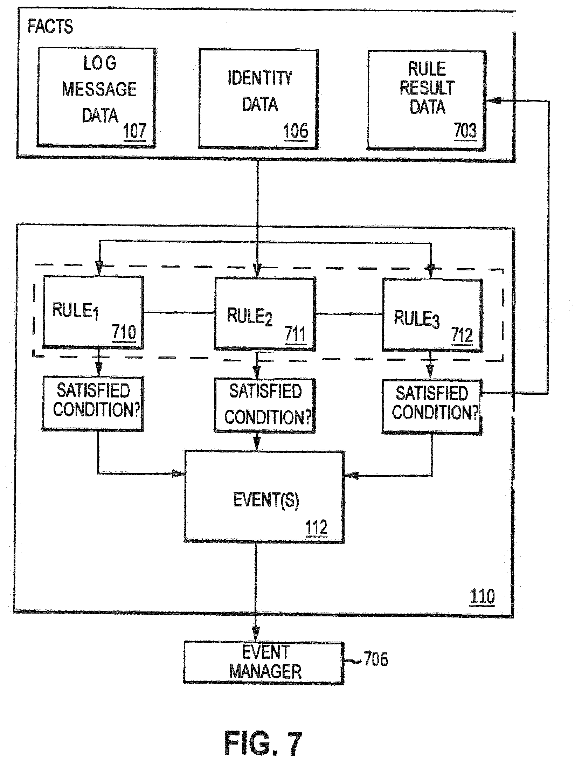

Turning now to **Fig. 7****,** log manager 110 (or another processing platform) may also utilize rules to identify occurrences of interest. Identity data 106 may include identity profiles or other information related to users and user accounts, typically accessed from identity manager 108. Rule result data 703 may be information generated in response to execution of a rule during a previous iteration of processing at the log manager 110. For example, the manager 110 may cycle through several iterations of various sets of rules which may return rule result data 703 which is to be processed using additional rules. In other words, when a condition of a rule is satisfied, the rule may generate result data 703 and an instruction to process the result data 703 with a given set of one or more additional rules. In this regard, the log manager 110 may continue processing a given set of input data until no further rule result data 703 needing to be processed with additional rules is generated.

Rules 710-712 may each contain at least one condition and at least one action. Further, each of the rules 710-712 may pass information between the other rules when certain conditions are dependent upon results from other rules. Although three rules are shown, it should be appreciated that any number of rules may be implemented at any given time. For example, a single rule may initially be used when data is received. Such a rule may identify the contents of the data and as a result, retrieve additional rules from rules database 111 which are appropriate for the given contents.

In the example illustrated in **Fig. 7****,** the rules selected may be targeted toward the identification of objects in the received log message data which pertain to identifiers or attributes. For example, the rules may search through log message data for indications (e.g., "@gmail.com" or "john.doe"). To aid in identification of such objects, the identity data 106 may include a list of common types and/or formats of objects. In this regard, the log manager 110 may be able to identify portions of log message data 107 which contain identifiers which have not previously been identified (in other words, those which have not yet been associated with an identity profile). For example, identity data 106 may include an input template of "XXXXX.com" that rules 710-712 use to search for domain names which are indicative of an identifier (e.g., an object with an object classification of "email address"). Additionally or alternatively, such an input template may be embedded within one of the rules 710-712.

Upon one or more rules 710-712 having a satisfied condition which indicates that an instance of log message data may contain data of interest, such as occurrence data, that segment of log message data may be forwarded to identity manager 108 (e.g., see Fig. 1). The identity manager 108 may then seek an existing identity profile associated with an identifier contained in the segment of log message data. If located, the segment of log message data or certain portions of information contained therein (e.g., login time, file transfer size, IP address from which a message originated) may be appended to the identity profile (e.g., via incorporation into a baseline behavior). In this regard, a baseline behavior may track a "normal" range of login times for a given identity profile. When log message data is received which includes a login time that appears to be normal, the baseline behavior may be modified to include it. In the absence of an existing identity profile associated with the identifier, identity manager 108 may construct a new identity profile for an unknown user.

The process of identifying occurrences of interest may include receiving log message data 107, identity data 106, and/or rule result data 703 at the log manager 110. Using the identity data 106, the rules 710-712 (e.g., from rules databased 111 illustrated in Fig. 1) may analyze log message data 107 for indications that an account associated with an identity profile in the identity data 106 has been subject to a security threat (e.g., failed login, suspicious file transfer, etc.). In response to an identified occurrence, the log manager 110 may forward an event 112 (e.g., a record of the occurrence comprising log message data modified to reflect the occurrence, a new message reflecting the occurrence, etc.) to event manager 706 for handling. The event 112 may include instructions for certain actions to be taken in accordance with rules 710-712, or the event manager 706 may process the event information to select appropriate actions for response.

Either the log manager 110 or event manager 706 may access identity profiles using the key from enriched log message data. Within an identity profile, an object may be identified which is not present in the enriched log message data and an action may be selected and implemented with respect to the second object. The selection of an action may occur at log manager 110 and be directed by one or more log message data processing rules, or may be selected by event manager 706 after receipt of the event 112.

Prior to generating an event, in some arrangements, a baseline behavior may be established and associated with an identity profile. The baseline behavior may be stored (e.g., in the identity profile, in the identity profile database, or in another database) for reference by one or more log message data processing rules. The baseline behavior may indicate an acceptable value or range of values associated with a function of the identity profile (e.g., login times, file transfer sizes, etc.). As additional log message data is received, occurrence data from the additional log message data may be analyzed and if deemed to be "normal," may be used to update the baseline behavior. When the occurrence data is not deemed "normal," the generating an event may include comparing the occurrence data to the baseline behavior with a log message data processing rule having a condition that is satisfied by the comparing, thereby triggering the rule.

**Fig. 8** illustrates a set of rules that may be used in accordance with the present teachings. For example, rules 801-809 may be implemented as rules 710-712 in Fig. 7. Each rule 801-809 comprises at least one condition and at least one action. In the event that the condition(s) is met, the action(s) may be implemented, for example, by event manager 706 of Fig. 7. Although these rules 801-809 are intended only to be by way of example and do not necessarily encompass the entire scope or range of rules which may be used, a brief description of each rule 801-809 is provided for illustration.

Rule 801 defines that if a file transfer exceeds 100 MB, then the account from which the file transfer was initiated should be disabled. This may entail locking the account entirely for a period of time or until an administrator re-enables it, requiring a new password to be established, etc. The threshold file size of 100 MB may be a default setting or may be set by an administrator. Such a threshold may be specific to a certain user or may be established at an enterprise level.

Rule 802 similarly defines a threshold file transfer size of 100 MB but provides for an action of "Apply Rule 3." It should be appreciated that "Rule 3" is an arbitrary example given for the purpose of illustration and does not necessarily refer to any specific rule described herein. Rather, rule 802 may refer to any additional rule available which may be invoked as a result of the satisfaction of rule 802. In such a scenario, the fact that rule 802 has been satisfied may be input into the log manager 110 as rule result data 703 in Fig. 7.

Rule 803 may be deployed as a second tier or higher rule. In other words, another rule or rules may need to be satisfied before rule 803 is invoked. For example, rule 803 may be the rule referenced in rule 802. In such an arrangement, the satisfaction of rule 802 would cause rule 803 to be applied, and if the account in question is, in fact, flagged as high security (may be flagged manually by an administrator or automatically by another rule), two actions may be taken. First, an administrator may be alerted that a high security account has been compromised. Second, the account associated with the security breach may be disabled and/or one or more other accounts associated with the user may be disabled.

Rule 804 illustrates another manner in which rules may interact with or be related to one another. In this example, the fact that Rules 7 and 8 (again, arbitrarily labelled for illustration) have been satisfied may cause rule 804 to invoke rule 14.

Rule 805 defines that if a file transfer exceeds a baseline behavior, Rule 9 should be applied. In this regard, the baseline behavior may be a static or dynamic threshold associated with the user. It may be defined to reflect a range or maximum limit in relation to historical file transfers. Therefore, a user attempting to initiate a file transfer which is suspiciously larger than that user's (or a group of which the user is a member) typical file transfer size may result in further analysis or may be associated with an immediate action (e.g., stop the file transfer).

Rule 806 defines that a high frequency of filed login attempts (e.g., incorrect password attempted more than five times on any given day) may result in application of another rule. Such other rule may be, for example, rule 803. In that situation, if the account is a high security account, the actions specified in rule 803 would be applied but if the account was not flagged as high security, there may be no action taken (unless another rule is satisfied which specifies an action to be taken).

Rule 807 defines that if a first account is compromised (e.g., excessively large file transfer, failed login, reported hack, etc.) then a security level of a second account may be elevated. In this regard, the event related to the first account may result in additional scrutiny of one or more other accounts such that normally germane activity may be considered suspicious in relation to the one or more other accounts. Notably, the second account may be owned by the same user or may be associated with another user.

Rule 808 defines that in the event two accounts have both been compromised, all other accounts associated with that user should be disabled. This rule may be applicable in a scenario in which all of a user's accounts are classified as low security. Normally, a breach of one low security account may be considered a minor occurrence that does not warrant further action (according to applied rules). However, the fact that two accounts associated with a single user's profile have been compromised may be considered a targeted attack that is likely to result in breaches of further accounts. The high probability that an attack on two or more accounts is not just a coincidence may justify disabling the remaining accounts not identified in the log message data leading to generation of an event to prevent further harm.

Rule 809 defines that if one or more accounts of a first user and one or more accounts of a second user are compromised, then the accounts of all other users within a specified group (e.g., all employees, Team Seven, human resources, etc.) should be disabled. In this regard, synchronous attacks on more than one user of a given group may indicate a larger, systematic attack on the group as a whole. By disabling the yet to be compromised accounts, further harm may be prevented.

Notably, actions to be taken are not limited to vulnerable accounts on the receiving end of attacks. Rather, user profiles may be constructed for external users such that actions may be taken on accounts associated with an external user (or group of users) when a potential attack originates from a different account associated with that external user. In other scenarios, certain users may be classified into groups in an identity manager (e.g., identity profiles of individuals linked together, or an identity profile generated for the group). When a threat is determined to be associated with a given user, action may be taken with respect to other users belonging to one or more groups into which the user is classified. As an example, a corporation may use a particular outside consulting agency which has access to the corporation's data network. Upon identifying a threat associated with an email account belonging to an employee of the consulting agency, all email accounts associated with other employees of the consulting agency may also be disabled or flagged.

The above described embodiments including the preferred embodiment and the best mode of putting the present teachings into effect known to the inventor at the time of filing are given by illustrative examples only.

Therefore, from one perspective, there have been described utilities for data network monitoring for identification of security threats and other occurrences of interest and analytical tools for selecting actions to be taken to reduce further harm or vulnerability. Log message data (e.g., log messages, alerts, etc.) may be enriched with supplemental information related to an identity (e.g., user) that is not initially present in the log message data, but which may be beneficial in generating events and identifying appropriate response actions.

The structured or normalized data processed by the utilities disclosed herein may be generated in any appropriate manner and by numerous types of devices. For instance, log messages and/or other data may be generated by a variety of network platforms including, for instance, Windows servers, Linux servers, UNIX servers, routers, switches, firewalls, intrusion detection systems, databases, ERP applications, CRM applications, and homegrown applications. The log data can be collected using standard network logging and messaging protocols, such as, for instance, Syslog, SNMP, SMTP and other proprietary and non-proprietary protocols. Moreover, the log file may be text based, a proprietary format, a binary format, etc. In addition, the logs may be written to databases such as Oracle, Sybase, MySQL, etc. As a result, a data system may generate a large number of logs in different formats, and it may be desired to monitor or analyze these logs for a variety of purposes. Fields of information within such log messages can be identified and the messages can be selectively processed in accordance with rules based on those fields. In this manner, enhanced processing of textual messages including log messages may be achieved along with improved audit and compliance analysis, application monitoring, security monitoring, and operations analysis. Moreover, large networks may be supported and growing networks may be adapted to.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable medium comprising instructions that, when executed, cause a processor to perform one or more of the methods described above. For example, the computer-readable medium may store such instructions for execution by a processor.

A computer-readable medium may form part of a computer program product, which may include packaging materials. A computer-readable medium may comprise a computer-readable data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer-readable medium may comprise transient media such as a carrier wave or transmission signal, which may occur with and/or between computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

It should be appreciated that the various aspects discussed herein may be implemented via any appropriate number and/or type of platforms, modules, processors, memory, etc., each of which may be embodied in hardware, software, firmware, middleware, and the like.

## Claims

1. A method for use in monitoring one or more platforms of one or more data systems, comprising:
obtaining in a first architecture (100) including one or more processors, from a first database of a first identity and access management, IAM, platform (101), objects (102) of at least a first object classification of a plurality of object classifications, wherein the first database has a first plurality of unique identities of an organization and a first plurality of objects, wherein one or more objects of the first plurality of objects is associated with each of the unique identities of the first plurality of unique identities, wherein the first plurality of objects corresponds to respective ones of the plurality of object classifications;
obtaining, in said first architecture (100), from the first IAM platform (101), objects of at least a second object classification of the plurality of object classifications for the first plurality of unique identities, the first and second object classifications being different;
generating, in said first architecture (100), for each unique identity of the first plurality of unique identities, an identity profile with the respective obtained objects of the first and second object classifications corresponding to each unique identity, wherein a first plurality of identity profiles are generated for the organization from the objects of the first IAM platform;
assigning, in said first architecture (100), based upon the respective object classification corresponding to each object, an object type of a plurality of object types to each object in each of the plurality of identity profiles, wherein the plurality of object types comprises a first object type and a different second object type;
storing the first plurality of identity profiles in a second database (106); and
associating, in said first architecture (100), each identity profile of the first plurality of identity profiles with a different respective key, wherein log message data that includes at least one of the objects of the first object type is associated with at least one respective key of a particular at least one identity profile of the first plurality of identity profiles in which the at least one of the objects of the first object type is located, to provide access to the at least one identity profile of the first plurality of identity profiles by log message data processing rules.

2. The method of claim 1, wherein each identity profile includes at least one first data structure defined by:
a) the at least one object of the at least first object type;
b) at least one object classification of the at least one object of the first object type; and
c) the at least first object type;
wherein each identity profile includes at least one second data structure defined by:
a) the at least one object of the at least second object type;
b) at least one object classification of the at least one object of the at least second object type; and
c) the at least second object type; and
wherein each object comprises a value, wherein each corresponding object classification describes the value, and wherein each corresponding object type describes the object classification.

3. The method of claim 1 or 2, further including operating said first architecture for:
accessing a second IAM platform that includes a third database having a second plurality of unique identities of the organization and a second plurality of objects associated with each unique identity of the second plurality of unique identities;
ascertaining that at least one of the unique identities of the second plurality of unique identities corresponds to at least one of the unique identities of the first plurality of unique identities;
obtaining, from the second IAM platform, objects of the second plurality of objects for the at least one of the unique identities of the second plurality of unique identities; and
updating the at least one identity profile of the first plurality of identity profiles with the objects of the second plurality of objects.

4. The method of claim 1, 2 or 3, further including operating said processing architecture for:
accessing a second IAM platform that includes a third database having a second plurality of unique identities of the organization and a second plurality of objects associated with each unique identity of the second plurality of unique identities;
obtaining, from the second IAM platform, objects of the first object classification for the second plurality of unique identities;
obtaining, from the second IAM platform, objects of the second object classification for the second plurality of unique identities;
assigning, based upon the respective object classification corresponding to each object of the second plurality of objects, an object type to each object of the second plurality of objects;
generating, for each unique identity of the second plurality of unique identities, an identity profile with the respective obtained objects of the at least first and second object classifications corresponding to each unique identity of the second plurality of unique identities, wherein a second plurality of identity profiles are generated for the organization from the objects of the second IAM platform;
storing the second plurality of identity profiles in a fourth database; and
associating each identity profile of the second plurality of identity profiles with a different respective key, wherein log message data received at a processor and that includes at least one object of the second plurality of objects of the at least first object type, is configured to be enriched with at least one respective key of a particular one of the second plurality of identity profiles in which the at least one object of the second plurality of objects of the first object type is located, to provide access to the at least one identity profile of the second plurality of identity profiles by log message data processing rules.

5. The method of claim 4, further including operating said first architecture for:
ascertaining that at least one unique identity of the second plurality of unique identities corresponds to at least one unique identity of the first plurality of unique identities; and
merging, based on the ascertaining, the at least one identity profile of the second plurality of identity profiles with the at least one identity profile of the second plurality of identity profiles;
wherein the merging includes:
identifying objects in the at least one identity profile of the second plurality of identity profiles not present in the at least one identity profile of the first plurality of identity profiles; and
updating the at least one identity profile of the first plurality of identity profiles with the identified objects of the at least one identity profile of the second plurality of identity profiles.

6. The method of any preceding claim, further including operating said first architecture for:
receiving first log message data at a processor;
detecting that at least one of the objects of the first object type is present in the received first log message data;
identifying at least a first identity profile of the first plurality of identity profiles in which the at least one of the objects of the first object type is located; and
enriching the received first log message data with the respective key associated with the first identity profile.

7. The method of claim 6, further including operating said first architecture for:
processing the enriched first log message data with at least one processing rule using the respective key.

8. The method of claim 7, further comprising operating said first architecture for:
receiving second log message data at the processor;
detecting that at least one other object of the objects of the first object type is present in the received second log message data;
identifying the first identity profile as including the at least one other object of the objects of the first object type; and
enriching the received second log message data with the respective key associated with the first identity profile, wherein using the respective key comprises processing the enriched first and second log message data based on the respective key.

9. The method of claim 7 or 8, wherein the using the respective key comprises:
accessing the first identity profile;
referencing at least one other object of the first object type with a first log message data processing rule; and
triggering the first log message data processing rule based on the at least one other object of the first object type.

10. The method of any of claims 6 to 9, further comprising operating said first architecture for:
determining that the first log message data is indicative of a successful authentication onto a network of the organization from an IP address;
recording the IP address and the respective key of the identified at least one of the identity profiles in an inference database;
receiving second log message data at a processor;
detecting that the IP address is present in the received second log message data;
identifying the IP address in the inference database; and
enriching the received second log message data with the respective key based on the respective key being associated with the IP address in the inference database.

11. A network monitoring system for use in monitoring one or more platforms of one or more data systems, the network monitoring system configured to:
obtain in a first architecture (100) including one or more processors, from a first database of a first identity and access management, IAM, platform (101), objects (102) of at least a first object classification of a plurality of object classifications, wherein the first database has a first plurality of unique identities of an organization and a first plurality of objects, wherein one or more objects of the first plurality of objects is associated with each of the unique identities of the first plurality of unique identities, wherein the first plurality of objects corresponds to respective ones of the plurality of object classifications;
obtain, in said first architecture (100), from the first IAM platform (101), objects of at least a second object classification of the plurality of object classifications for the first plurality of unique identities, the first and second object classifications being different;
generate, in said first architecture (100), for each unique identity of the first plurality of unique identities, an identity profile with the respective obtained objects of the first and second object classifications corresponding to each unique identity, wherein a first plurality of identity profiles are generated for the organization from the objects of the first IAM platform;
assign, in said first architecture (100), based upon the respective object classification corresponding to each object, an object type of a plurality of object types to each object in each of the plurality of identity profiles, wherein the plurality of object types comprises a first object type and a different second object type;
store the first plurality of identity profiles in a second database (106); and
associate, in said first architecture (100), each identity profile of the first plurality of identity profiles with a different respective key, wherein log message data that includes at least one of the objects of the first object type is associated with at least one respective key of a particular at least one identity profile of the first plurality of identity profiles in which the at least one of the objects of the first object type is located, to provide access to the at least one identity profile of the first plurality of identity profiles by log message data processing rules.

12. The network monitoring system of claim 11, further configured to provide functionality corresponding to the method of any of claims 2 to 10.

13. A computer program product comprising computer-implementable instructions that when implemented cause one or more programmable processors to become configured to carry out the method of any of claims 1-10.

## Patentansprüche

1. Verfahren zur Verwendung beim Überwachen einer oder mehrerer Plattformen von einem oder mehreren Datensystemen, umfassend:
Erhalten in einer ersten Architektur (100) einschließlich eines oder mehrerer Prozessoren, von einer ersten Datenbank einer ersten Identity- And Access Management-, IAM-, Plattform (101), von Objekten (102) von mindestens einer ersten Objektklassifikation von mehreren Objektklassifikationen, wobei die erste Datenbank mehrere eindeutige Identitäten einer Organisation und mehrerer erster Objekte hat, wobei eines oder mehrere Objekte der mehreren ersten Objekte mit jedem der eindeutigen Identitäten der mehreren ersten eindeutigen Identitäten assoziiert ist, wobei die mehreren ersten Objekte jeweiligen einzelnen der mehreren Objektklassifikationen entsprechen;
Erhalten, in der ersten Architektur (100), von der ersten IAM-Plattform (101), von Objekten von mindestens einer zweiten Objektklassifikation der mehreren Objektklassifikationen für die mehreren ersten eindeutigen Identitäten, wobei die erste und zweite Objektklassifikation verschieden sind;
Erzeugen, in der ersten Architektur (100), für jede eindeutige Identität der mehreren ersten eindeutigen Identitäten, eines Identitätsprofils mit den jeweiligen erhaltenen Objekten der ersten und zweiten Objektklassifikation entsprechend jeder eindeutigen Identität, wobei mehrere erste Identitätsprofile für die Organisation aus den Objekten der ersten IAM-Plattform erzeugt werden;
Zuweisen, in der ersten Architektur (100), auf Basis der jeweiligen Objektklassifikation entsprechend jedem Objekt, eines Objekttyps von mehreren Objekttypen zu jedem Objekt in jedem der mehreren Identitätsprofile, wobei die mehreren Objekttypen einen ersten Objekttyp und einen anderen zweiten Objekttyp umfassen;
Speichern der mehreren ersten Identitätsprofile in einer zweiten Datenbank (106); und
Assoziieren, in der ersten Architektur (100), jedes Identitätsprofils der mehreren ersten Identitätsprofile mit einem anderen jeweiligen Schlüssel, wobei Log-Nachrichtendaten, die mindestens eines der Objekte vom ersten Objekttyp enthalten, mit mindestens einem jeweiligen Schlüssel eines bestimmten mindestens einen Identitätsprofils der mehreren ersten Identitätsprofile assoziiert sind, in denen sich mindestens eines der Objekte des ersten Objekttyps befindet, um Zugriff zu dem mindestens einen Identitätsprofil der mehreren ersten Identitätsprofile durch Log-Nachrichtendaten-Verarbeitungsregeln bereitzustellen.

2. Verfahren nach Anspruch 1, wobei jedes Identitätsprofil mindestens eine erste Datenstruktur enthält, definiert durch:
a) das mindestens eine Objekt von dem mindestens ersten Objekttyp;
b) mindestens eine Objektklassifikation des mindestens einen Objekts des ersten Objekttyps; und
c) den mindestens ersten Objekttyp;
wobei jedes Identitätsprofil mindestens eine zweite Datenstruktur enthält, definiert durch:
a) das mindestens Objekt von dem mindestens zweiten Objekttyp;
b) mindestens eine Objektklassifikation des mindestens einen Objekts des mindestens zweiten Objekttyps; und
c) den mindestens zweiten Objekttyp; und
wobei jedes Objekt einen Wert umfasst, wobei jede entsprechende Objektklassifikation den Wert beschreibt, und wobei jeder entsprechende Objekttyp die Objektklassifikation beschreibt.

3. Verfahren nach Anspruch 1 oder 2, weiter beinhaltend das Betreiben der ersten Architektur zum:
Zugreifen auf eine zweite IAM-Plattform, die eine dritte Datenbank enthält mit mehreren zweiten eindeutigen Identitäten der Organisation und mehreren zweiten Objekten, assoziiert mit jeder eindeutigen Identität der mehreren zweiten eindeutigen Identitäten;
Ermitteln, dass mindestens eine der eindeutigen Identitäten der mehreren zweiten eindeutigen Identitäten mindestens einer der eindeutigen Identitäten der mehreren eindeutigen Identitäten entspricht;
Erhalten, von der zweiten IAM-Plattform, von Objekten der mehreren zweiten Objekte für die mindestens eine der eindeutigen Identitäten der mehreren zweiten eindeutigen Identitäten; und
Aktualisieren des mindestens einen Identitätsprofils der mehreren ersten Identitätsprofile mit den Objekten der mehreren zweiten Objekte.

4. Verfahren nach Anspruch 1, 2 oder 3, weiter beinhaltend das Betreiben der Verarbeitungsarchitektur zum:
Zugreifen auf eine zweite IAM-Plattform, die eine dritte Datenbank enthält mit mehreren zweiten eindeutigen Identitäten der Organisation und mehreren zweiten Objekten, mit jeder eindeutigen Identität der mehreren zweiten eindeutigen Identitäten assoziiert;
Erhalten, von der zweiten IAM-Plattform, von Objekten der ersten Objektklassifikation für die mehreren zweiten eindeutigen Identitäten;
Erhalten, von der zweiten IAM-Plattform, von Objekten der zweiten Objektklassifikation für die mehreren zweiten eindeutigen Identitäten;
Zuweisen, auf Basis der jeweiligen Objektklassifikation entsprechend jedem Objekt der mehreren zweiten Objekte, eines Objekttyps zu jedem Objekt der mehreren zweiten Objekte;
Erzeugen, für jede eindeutige Identität der mehreren zweiten eindeutigen Identitäten, eines Identitätsprofils mit den jeweiligen erhaltenen Objekten der mindestens ersten und zweiten Objektklassifikation entsprechend jeder eindeutigen Identität der mehreren zweiten eindeutigen Identitäten, wobei mehrere zweite Identitätsprofile erzeugt werden für die Organisation von den Objekten der zweiten IAM-Plattform;
Speichern der mehreren zweiten Identitätsprofile in einer vierten Datenbank; und
Assoziieren jedes Identitätsprofils der mehreren zweiten Identitätsprofile mit einem anderen jeweiligen Schlüssel, wobei Log-Nachrichtendaten Empfangen an einem Prozessor und die mindestens ein Objekt der mehreren zweiten Objekte des mindestens ersten Objekttyps enthalten, konfiguriert sind zur Anreicherung mit mindestens einem jeweiligen Schlüssel eines jeweiligen der mehreren zweiten Identitätsprofile, in denen sich das mindestens eine Objekt der mehreren zweiten Objekte des ersten Objekttyps befindet, um Zugriff auf das mindestens eine Identitätsprofil der mehreren zweiten Identitätsprofile durch Log-Nachrichtendaten-Verarbeitungsregeln bereitzustellen.

5. Verfahren nach Anspruch 4, weiter beinhaltend das Betreiben der ersten Architektur zum:
Ermitteln, dass mindestens eine eindeutige Identität der mehreren zweiten eindeutigen Identitäten mindestens einer eindeutigen Identität der mehreren ersten eindeutigen Identitäten entspricht; und
Zusammenführen, auf Basis des Ermittelns, des mindestens einen Identitätsprofils der mehreren zweiten Identitätsprofile mit dem mindestens einen Identitätsprofil der mehreren zweiten Identitätsprofile;
wobei das Zusammenführen beinhaltet:
Identifizieren von Objekten in dem mindestens einen Identitätsprofil der mehreren zweiten Identitätsprofile nicht anwesend in dem mindestens einen Identitätsprofil der mehreren ersten Identitätsprofile; und
Aktualisieren des mindestens einen Identitätsprofils der mehreren ersten Identitätsprofile mit den identifizierten Objekten des mindestens einen Identitätsprofils der mehreren zweiten Identitätsprofile.

6. Verfahren nach einem vorhergehenden Anspruch, weiter beinhaltend das Betreiben der ersten Architektur zum:
Empfangen erster Log-Nachrichtendaten an einem Prozessor;
Detektieren, dass mindestens eines der Objekte des ersten Objekttyps in den empfangenen ersten Log-Nachrichtendaten vorliegt;
Identifizieren mindestens eines ersten Identitätsprofils der mehreren ersten Identitätsprofile, in denen sich das mindestens eine der Objekte des ersten Objekttyps befindet; und
Anreichern der empfangenen ersten Log-Nachrichtendaten mit dem mit dem ersten Identitätsprofil assoziierten jeweiligen Schlüssel.

7. Verfahren nach Anspruch 6, weiter beinhaltend das Betreiben der ersten Architektur zum:
Verarbeiten der angereicherten ersten Log-Nachrichtendaten mit mindestens einer Verarbeitungsregel unter Verwendung des jeweiligen Schlüssels.

8. Verfahren nach Anspruch 7, weiter umfassend das Betreiben der ersten Architektur zum:
Senden zweiter Log-Nachrichtendaten an den Prozessor;
Detektieren, dass mindestens ein anderes Objekt der Objekte des ersten Objekttyps in den empfangenen zweiten Log-Nachrichtendaten vorliegt;
Identifizieren des ersten Identitätsprofils als das mindestens eine andere Objekt der Objekte des ersten Objekttyps enthaltend; und
Anreichern der empfangenen zweiten Log-Nachrichtendaten mit dem mit dem ersten Identitätsprofil assoziierten jeweiligen Schlüssel, wobei das Verwenden des jeweiligen Schlüssels das Verarbeiten der angereicherten ersten und zweiten Log-Nachrichtendaten auf Basis des jeweiligen Schlüssels umfasst.

9. Verfahren nach Anspruch 7 oder 8, wobei das Verwenden des jeweiligen Schlüssels umfasst:
Zugreifen auf das erste Identitätsprofil;
Referenzieren mindestens eines anderen Objekts des ersten Objekttyps mit einer ersten Log-Nachrichtendaten-Verarbeitungsregel; und
Auslösen der ersten Log-Nachrichtendaten-Verarbeitungsregel auf Basis des mindestens einen anderen Objekts des ersten Objekttyps.

10. Verfahren nach einem der Ansprüche 6 bis 9, weiter umfassend das Betreiben der ersten Architektur zum:
Bestimmen, dass die ersten Log-Nachrichtendaten eine erfolgreiche Authentisierung auf ein Netzwerk der Organisation von einer IP-Adresse anzeigt;
Aufzeichnen der IP-Adresse und des jeweiligen Schlüssels des identifizierten mindestens einen der Identitätsprofile in einer Schlussfolgerungsdatenbank;
Empfangen zweiter Log-Nachrichtendaten an einem Prozessor;
Detektieren, dass die IP-Adresse in den empfangenen zweiten Log-Nachrichtendaten vorliegt;
Identifizieren der IP-Adresse in der Schlussfolgerungsdatenbank; und
Anreichern der empfangenen zweiten Log-Nachrichtendaten mit dem jeweiligen Schlüssel auf Basis des jeweiligen Schlüssels, der mit der IP-Adresse in der Schlussfolgerungsdatenbank assoziiert ist.

11. Netzwerküberwachungssystem zur Verwendung beim Überwachen einer oder mehrerer Plattformen von einem oder mehreren Datensystemen, wobei das Netzwerküberwachungssystem ausgelegt ist zum:
Erhalten in einer ersten Architektur (100) einschließlich eines oder mehrerer Prozessoren, von einer ersten Datenbank einer ersten Identity-And-Access-Management-, IAM-, Plattform (101), von Objekten (102) von mindestens einer ersten Objektklassifikation von mehreren Objektklassifikationen, wobei die erste Datenbank mehrere eindeutige Identitäten einer Organisation und mehrerer erster Objekte hat, wobei eines oder mehrere Objekte der mehreren ersten Objekte mit jedem der eindeutigen Identitäten der mehreren ersten eindeutigen Identitäten assoziiert ist, wobei die mehreren ersten Objekte jeweiligen einzelnen der mehreren Objektklassifikationen entsprechen;
Erhalten, in der ersten Architektur (100), von der ersten IAM-Plattform (101), von Objekten von mindestens einer zweiten Objektklassifikation der mehreren Objektklassifikationen für die mehreren ersten eindeutigen Identitäten, wobei die erste und zweite Objektklassifikation verschieden sind;
Erzeugen, in der ersten Architektur (100), für jede eindeutige Identität der mehreren ersten eindeutigen Identitäten, eines Identitätsprofils mit den jeweiligen erhaltenen Objekten der ersten und zweiten Objektklassifikation entsprechend jeder eindeutigen Identität, wobei mehrere erste Identitätsprofile für die Organisation aus den Objekten der ersten IAM-Plattform erzeugt werden;
Zuweisen, in der ersten Architektur (100), auf Basis der jeweiligen Objektklassifikation entsprechend jedem Objekt, eines Objekttyps von mehreren Objekttypen zu jedem Objekt in jedem der mehreren Identitätsprofile, wobei die mehreren Objekttypen einen ersten Objekttyp und einen anderen zweiten Objekttyp umfassen;
Speichern der mehreren ersten Identitätsprofile in einer zweiten Datenbank (106); und
Assoziieren, in der ersten Architektur (100), jedes Identitätsprofils der mehreren ersten Identitätsprofile mit einem anderen jeweiligen Schlüssel, wobei Log-Nachrichtendaten, die mindestens eines der Objekte vom ersten Objekttyp enthalten, mit mindestens einem jeweiligen Schlüssel eines bestimmten mindestens einen Identitätsprofils der mehreren ersten Identitätsprofile assoziiert sind, in denen sich mindestens eines der Objekte des ersten Objekttyps befindet, um Zugriff zu dem mindestens einen Identitätsprofil der mehreren ersten Identitätsprofile durch Log-Nachrichtendaten-Verarbeitungsregeln bereitzustellen.

12. Netzwerküberwachungssystem nach Anspruch 11, weiter ausgelegt zum Bereitstellen einer Funktionalität entsprechend dem Verfahren nach einem der Ansprüche 2 bis 10.

13. Computerprogrammprodukt umfassend computerumsetzbare Anweisungen, die bei Umsetzung bewirken, dass einer oder mehrere programmierbare Prozessoren ausgelegt werden zum Ausführen des Verfahrens nach einem der Ansprüche 1-10.

## Revendications

1. Procédé destiné à être utilisé dans la surveillance d'une ou plusieurs plates-formes d'un ou plusieurs systèmes de données, comprenant :
l'obtention dans une première architecture (100) comprenant un ou plusieurs processeurs, à partir d'une première base de données d'une première plate-forme de gestion d'identité et d'accès, IAM (101), d'objets (102) d'au moins une première classification d'objets parmi une pluralité de classifications d'objets, dans lequel la première base de données présente une première pluralité d'identités uniques d'une organisation et une première pluralité d'objets, dans lequel un ou plusieurs objets parmi la première pluralité d'objets sont associés à chacune des identités uniques parmi la première pluralité d'identités uniques, dans lequel la première pluralité d'objets correspond à des classifications respectives parmi la pluralité de classifications d'objets ;
l'obtention, dans ladite première architecture (100), à partir de la première plate-forme IAM (101), d'objets d'au moins une seconde classification d'objets parmi la pluralité de classifications d'objets pour la première pluralité d'identités uniques, les première et seconde classifications d'objets étant différentes ;
la génération, dans ladite première architecture (100), pour chaque identité unique parmi la première pluralité d'identités uniques, d'un profil d'identité ayant les objets obtenus respectifs des première et seconde classifications d'objets correspondant à chaque identité unique, dans lequel une première pluralité de profils d'identité sont générés pour l'organisation à partir des objets de la première plate-forme IAM ;
l'attribution, dans ladite première architecture (100), sur la base de la classification d'objets respective correspondant à chaque objet, d'un type d'objet parmi une pluralité de types d'objet à chaque objet dans chaque profil parmi la pluralité de profils d'identité, dans lequel la pluralité de types d'objet comprend un premier type d'objet et un second type d'objet différent ;
le stockage de la première pluralité de profils d'identité dans une deuxième base de données (106) ; et l'association, dans ladite première architecture (100), de chaque profil d'identité parmi la première pluralité de profils d'identité avec une clé respective différente, dans lequel des données de messages de journal qui comprennent au moins un des objets du premier type d'objet sont associées à au moins une clé respective d'au moins un profil d'identité particulier parmi la première pluralité de profils d'identité dans lequel l'au moins un des objets du premier type d'objet est situé, pour fournir un accès à l'au moins un profil d'identité parmi la première pluralité de profils d'identité par des règles de traitement de données de messages de journal.

2. Procédé selon la revendication 1, dans lequel chaque profil d'identité comprend au moins une première structure de données définie par :
a) l'au moins un objet de l'au moins un premier type d'objet ;
b) l'au moins une classification d'objets de l'au moins un objet du premier type d'objet ; et
c) l'au moins un premier type d'objet ;
dans lequel chaque profil d'identité comprend au moins une seconde structure de données définie par :
a) l'au moins un objet de l'au moins un second type d'objet ;
b) au moins une classification d'objets de l'au moins un objet de l'au moins un second type d'objet ; et
c) l'au moins un second type d'objet ; et
dans lequel chaque objet comprend une valeur, dans lequel chaque classification d'objets correspondante décrit la valeur, et dans lequel chaque type d'objet correspondant décrit la classification d'objets.

3. Procédé selon la revendication 1 ou 2, comprenant en outre l'utilisation de ladite première architecture pour :
accéder à une seconde plate-forme IAM qui comprend une troisième base de données ayant une seconde pluralité d'identités uniques de l'organisation et une seconde pluralité d'objets associés à chaque identité unique de la seconde pluralité d'identités uniques ;
déterminer qu'au moins une des identités uniques parmi la seconde pluralité d'identités uniques correspond à au moins une des identités uniques parmi la première pluralité d'identités uniques ;
obtenir, à partir de la seconde plate-forme IAM, des objets de la seconde pluralité d'objets pour l'au moins une des identités uniques parmi la seconde pluralité d'identités uniques ; et
mettre à jour l'au moins un profil d'identité parmi la première pluralité de profils d'identité avec les objets de la seconde pluralité d'objets.

4. Procédé selon la revendication 1, 2 ou 3, comprenant en outre l'utilisation de ladite architecture de traitement pour :
accéder à une seconde plate-forme IAM qui comprend une troisième base de données ayant une seconde pluralité d'identités uniques de l'organisation et une seconde pluralité d'objets associés à chaque identité unique parmi la seconde pluralité d'identités uniques ;
obtenir, à partir de la seconde plate-forme IAM, des objets de la première classification d'objets pour la seconde pluralité d'identités uniques ;
obtenir, à partir de la seconde plate-forme IAM, des objets parmi la seconde classification d'objets pour la seconde pluralité d'identités uniques ;
attribuer, sur la base de la classification d'objets respective correspondant à chaque objet parmi la seconde pluralité d'objets, un type d'objet à chaque objet parmi la seconde pluralité d'objets ;
générer, pour chaque identité unique parmi la seconde pluralité d'identités uniques, un profil d'identité avec les objets obtenus respectifs des au moins première et seconde classifications d'objets correspondant à chaque identité unique parmi la seconde pluralité d'identités uniques, dans lequel une seconde pluralité de profils d'identité sont générés pour l'organisation à partir des objets de la seconde plate-forme IAM ;
stocker la seconde pluralité de profils d'identité dans une quatrième base de données ; et
associer chaque profil d'identité parmi la seconde pluralité de profils d'identité avec une clé respective différente, dans lequel des données de messages de journal reçues au niveau d'un processeur et qui comprennent au moins un objet parmi la seconde pluralité d'objets de l'au moins un premier type d'objet, sont configurées pour être enrichies avec au moins une clé respective d'un profil particulier parmi la seconde pluralité de profils d'identité dans lequel l'au moins un objet parmi la seconde pluralité d'objets du premier type d'objet est situé, pour fournir un accès à l'au moins un profil d'identité parmi la seconde pluralité de profils d'identité par des règles de traitement de données de messages de journal.

5. Procédé selon la revendication 4, comprenant en outre l'utilisation de ladite première architecture pour :
déterminer qu'au moins une identité unique parmi la seconde pluralité d'identités uniques correspond à au moins une identité unique parmi la première pluralité d'identités uniques ; et
fusionner, sur la base de la détermination, l'au moins un profil d'identité parmi la seconde pluralité de profils d'identité avec l'au moins un profil d'identité parmi la seconde pluralité de profils d'identité ;
dans lequel la fusion comprend :
l'identification d'objets dans l'au moins un profil d'identité parmi la seconde pluralité de profils d'identité qui ne sont pas présents dans l'au moins un profil d'identité parmi la première pluralité de profils d'identité ; et
la mise à jour de l'au moins un profil d'identité parmi la première pluralité de profils d'identité avec les objets identifiés de l'au moins un profil d'identité parmi la seconde pluralité de profils d'identité.

6. Procédé selon l'une quelconque des revendications précédentes, comprenant en outre l'utilisation de ladite première architecture pour :
recevoir des premières données de messages de journal au niveau d'un processeur ;
détecter qu'au moins un des objets du premier type d'objet est présent dans les premières données de messages de journal reçues ;
identifier au moins un premier profil d'identité parmi la première pluralité de profils d'identité dans lequel l'au moins un des objets du premier type d'objet est situé ; et
enrichir les premières données de messages de journal reçues avec la clé respective associée au premier profil d'identité.

7. Procédé selon la revendication 6, comprenant en outre l'utilisation de ladite première architecture pour :
traiter les premières données de messages de journal enrichies avec au moins une règle de traitement à l'aide de la clé respective.

8. Procédé selon la revendication 7, comprenant en outre l'utilisation de ladite première architecture pour :
recevoir des secondes données de messages de journal au niveau du processeur ;
détecter qu'au moins un autre objet parmi les objets du premier type d'objet est présent dans les secondes données de messages de journal reçues ;
identifier le premier profil d'identité comme comprenant l'au moins un autre objet parmi les objets du premier type d'objets ; et
enrichir les secondes données de messages de journal reçues avec la clé respective associée au premier profil d'identité, dans lequel l'utilisation de la clé respective comprend le traitement des premières et secondes données de messages de journal enrichies sur la base de la clé respective.

9. Procédé selon la revendication 7 ou 8, dans lequel l'utilisation de la clé respective comprend :
l'accès au premier profil d'identité ;
le référencement d'au moins un autre objet du premier type d'objets avec une règle de traitement des premières données de messages de journal ; et
le déclenchement de la règle de traitement des premières données de messages de journal sur la base de l'au moins un autre objet du premier type d'objet.

10. Procédé selon l'une quelconque des revendications 6 à 9, comprenant en outre l'utilisation de ladite première architecture pour :
déterminer que les premières données de messages de journal indiquent une authentification réussie sur un réseau de l'organisation à partir d'une adresse IP ;
enregistrer l'adresse IP et la clé respective de l'au moins un profil identifié parmi les profils d'identité dans une base de données d'inférence ;
recevoir des secondes données de messages de journal au niveau d'un processeur ;
détecter que l'adresse IP est présente dans les secondes données de messages de journal reçues ;
identifier l'adresse IP dans la base de données d'inférence ; et
enrichir les secondes données de messages de journal reçues avec la clé respective sur la base de la clé respective associée à l'adresse IP dans la base de données d'inférence.

11. Système de surveillance de réseau destiné à être utilisé dans la surveillance d'une ou plusieurs plates-formes d'un ou plusieurs systèmes de données, le système de surveillance de réseau est configuré pour :
obtenir dans une première architecture (100) comprenant un ou plusieurs processeurs, à partir d'une première base de données d'une première plate-forme de gestion d'identité et d'accès, IAM (101), d'objets (102) d'au moins une première classification d'objets parmi une pluralité de classifications d'objets, dans lequel la première base de données présente une première pluralité d'identités uniques d'une organisation et une première pluralité d'objets, dans lequel un ou plusieurs objets parmi la première pluralité d'objets sont associés à chacune des identités uniques parmi la première pluralité d'identités uniques, dans lequel la première pluralité d'objets correspond à des classifications respectives parmi la pluralité de classifications d'objets ;
obtenir, dans ladite première architecture (100), à partir de la première plate-forme IAM (101), des objets d'au moins une seconde classification d'objets parmi la pluralité de classifications d'objets pour la première pluralité d'identités uniques, les première et seconde classifications d'objets étant différentes ;
générer, dans ladite première architecture (100), pour chaque identité unique parmi la première pluralité d'identités uniques, un profil d'identité ayant les objets obtenus respectifs des première et seconde classifications d'objets correspondant à chaque identité unique, dans lequel une première pluralité de profils d'identité sont générés pour l'organisation à partir des objets de la première plate-forme IAM ;
attribuer, dans ladite première architecture (100), sur la base de la classification d'objets respective correspondant à chaque objet, un type d'objet parmi une pluralité de types d'objet à chaque objet dans chaque profil parmi la pluralité de profils d'identité, dans lequel la pluralité de types d'objet comprend un premier type d'objet et un second type d'objet différent ;
stocker la première pluralité de profils d'identité dans une deuxième base de données (106) ; et
associer, dans ladite première architecture (100), chaque profil d'identité parmi la première pluralité de profils d'identité avec une clé respective différente, dans lequel des données de messages de journal qui comprennent au moins un des objets du premier type d'objet sont associées à au moins une clé respective d'au moins un profil d'identité particulier parmi la première pluralité de profils d'identité dans lequel l'au moins un des objets du premier type d'objet est situé, pour fournir un accès à l'au moins un profil d'identité parmi la première pluralité de profils d'identité par des règles de traitement de données de messages de journal.

12. Système de surveillance de réseau selon la revendication 11, configuré en outre pour fournir une fonctionnalité correspondant au procédé selon l'une quelconque des revendications 2 à 10.

13. Produit de programme informatique comprenant des instructions pouvant être mises en œuvre par ordinateur qui, lorsqu'elles sont mises en œuvre, amènent un ou plusieurs processeurs programmables à se configurer pour mettre en œuvre le procédé selon l'une quelconque des revendications 1 à 10.
